# EUROPEAN PATENT SPECIFICATION

(11) **EP 3 406 984 B1**
(45) Date of publication and mention of the grant of the patent: **23.09.2020**
(21) Application number: 18173375.9
(22) Date of filing: 18.05.2018
(51) Int. Cl.: F24F 11/50, F24F 11/56, F24F 11/58, F24F 11/52, F24F 11/38, F24F 11/54, G08C 23/04, H04L 12/28, H04W 4/70

(54) **DEVICE INFORMATION MANAGEMENT SYSTEM**
SYSTEM ZUR VERWALTUNG VON VORRICHTUNGSINFORMATIONEN
SYSTÈME DE GESTION D'INFORMATIONS DE DISPOSITIF

(30) Priority: 23.05.2017 JP 2017102010; 14.07.2017 JP 2017138442; 14.07.2017 JP 2017138443
(43) Date of publication of application: 28.11.2018
(73) Proprietor: Panasonic Intellectual Property Management Co., Ltd., Osaka-shi, Osaka 540-6207 (JP)
(72) Inventor: FUKUDA, Osamu, Osaka, 540-6207 (JP); KUSAKABE, Tomoaki, Osaka, 540-6207 (JP); IZUMI, Shinji, Osaka, 540-6207 (JP); ARAKAWA, Toru, Osaka, 540-6207 (JP); KOBAYASHI, Takayuki, Osaka, 540-6207 (JP); HIURA, Masahiro, Osaka, 540-6207 (JP); SEKINE, Takashi, Osaka, 540-6207 (JP); DOBASHI, Mitsuhiro, Osaka, 540-6207 (JP); FUKASAWA, Masahiro, Osaka, 540-6207 (JP)
(74) Representative: Eisenführ Speiser

(56) References cited:
- EP-A2- 2 682 685
- JP-A- 2017 163 221
- US-A1- 2014 319 232
- US-A1- 2015 308 702
- US-A1- 2016 072 638

## Description

### BACKGROUND OF THE INVENTION

### Field of the Invention

The present invention relates to a device information management system and, in particular, to a device information management system that allows a terminal apparatus to obtain information easily.

### Description of the Related Art

Conventionally, for example, in an air conditioning apparatus, various displays and operations are performed using a remote control.

Conventionally, a technology is disclosed where, for example, a basic screen (110) is provided with a message display field for displaying a message, a controller (20) displays nothing in the message display field while an abnormal notification signal input for issuing a notification about an abnormality is not received from an air conditioning apparatus, the controller (20) receives the abnormal notification signal input from the air conditioning apparatus, displays, in the message display field, a text message for requesting a first operation input through determination means (15), subsequently, switches the screen on a display (11) to another screen (112) upon receipt of the first operation input through the determination means (15), and collectively displays, on the display (11), abnormal time support information (131) made up of multiple pieces of information required by a user about an abnormality corresponding to the abnormal notification signal input (for example, see Japanese Patent No. 4820313).

The technology of Japanese Patent No. 4820313 can display a message on the remote control in case of abnormality.

However, according to the technology of Japanese Patent No. 4820313, a maintenance operator installs the air conditioning apparatus, and information on devices constituting the air conditioning apparatus cannot be collectively managed.

In a case of maintenance of the air conditioning apparatus, it is useful if pieces of information on the installed devices can be integrally browsed and confirmed.

In a case of communication between the remote control and the terminal apparatus, for example, a short-range communication, such as RFID or Bluetooth (R), can be used. Such a short-range communication has a problem in that a device for transmission is required to be provided with a dedicated transmission device and a terminal apparatus for reception is also required to be provided with a dedicated reception device, which increases the equipment cost.

There is another problem in that additional installation of a new communication device to an existing device is sometimes difficult owing to the structure of the device, and the equipment cost is also required.

US 2016/0072638 A1 discloses systems and methods for remotely controlling infrared ("IR") enabled appliances via a networked device. The technology enables one or multiple users to control, monitor, and manage their appliances (e.g. air conditioners, television sets, multimedia systems, window curtains, etc.) both locally and remotely, irrespective of the users' location or their line of sight. In various embodiments, the technology includes a device with integrated Wi-Fi and IR subsystems connected via a cloud platform to a user application interface that can control appliances, generate analytics, schedule automatic operation, and perform smart learning operation,

The present invention has been made in view of the points described above, and has an object to provide a device information management system that can collectively manage device information.

### SUMMARY OF THE INVENTION

To achieve the objects described above, the present invention includes a device management system according to claim 1. The device information management system includes inter alia: a device including a device controller that outputs a run control signal for an air conditioning apparatus and obtains device information on devices constituting the air conditioning apparatus, and a device communicator; and a terminal apparatus including a terminal controller, a terminal communicator that communicates with the device, and a terminal display, a cloud server communicable with the terminal apparatus, wherein the terminal apparatus obtains the device information transmitted from the device controller, the terminal controller transmits the obtained device information to the cloud server, and the cloud server stores therein the device information, whereby the device communicator is a light emitter, the terminal communicator is a light receiver that performs visible light communication with the light emitter of the device,the terminal apparatus, by the device controller performing light emission control for the light emitter, allows the light receiver to receive the device information transmitted from the light emitter through the visible light communication, and allows the device information to be obtained, and the terminal apparatus can receive property information on a plurality of properties where the air conditioning apparatus is installed, the terminal apparatus transmits the property information to the cloud server, and the cloud server stores therein the property information in association with the device information.

Accordingly, the terminal apparatus can obtain the device information from the device, and register the information. Consequently, the device information on the devices constituting the air conditioning apparatus can be collectively managed.

According to the present invention, the terminal apparatus can obtain the device information from the device, and register the information. Consequently, the device information on the devices constituting the air conditioning apparatus can be collectively managed.

### BRIEF DESCRIPTION OF THE DRAWINGS

FIG. 1 is a configuration diagram showing a first embodiment of an air conditioning apparatus to which the present invention is applied;
FIG. 2 is a block diagram showing a control configuration of the first embodiment;
FIGS. 3A to 3D are diagrams showing a display example in a case where device information in the first embodiment is registered;
FIGS. 4A to 4H are diagrams showing a process of registering property information in the first embodiment;
FIGS. 5A to 5D are diagrams showing a process of inputting inspection information in the first embodiment;
FIGS. 6A to 6D are diagrams showing a process of browsing an inspection history in the first embodiment;
FIG. 7 is a diagram showing an example of operation states of an actual account and a temporary account in the first embodiment;
FIG. 8 is a diagram showing a state where a production ID in the first embodiment is changed;
FIG. 9 is a flowchart showing a device information registration operation in the first embodiment;
FIG. 10 is a flowchart showing a property information registration operation in the first embodiment;
FIG. 11 is a flowchart showing an account-based working operation in the first embodiment;
FIG. 12 is a flowchart showing a specific ID information management operation in the first embodiment;
FIG. 13 is a configuration diagram showing a second embodiment of an air conditioning apparatus to which the present invention is applied;
FIG. 14 is a block diagram showing a control configuration of the second embodiment;
FIG. 15 is a diagram showing a display example of a remote control display in the second embodiment;
FIG. 16 is a flowchart showing an information transmission operation in the second embodiment;
FIG. 17 is a flowchart showing an information transmission operation through a proximity sensor in the second embodiment;
FIG. 18 is a configuration diagram showing a third embodiment of an air conditioning apparatus to which the present invention is applied;
FIG. 19 is a schematic diagram of a device information management system in the third embodiment;
FIG. 20 is a block diagram showing a control configuration of the third embodiment;
FIG. 21 is a diagram schematically showing transmission and reception in a test run mode in the third embodiment;
FIG. 22 is a timing chart showing the state of each device in the test run state in the third embodiment;
FIG. 23 is a diagram showing an example of a table that defines thresholds in the third embodiment;
FIG. 24 is a diagram showing an example in a case where the result of the test run is determined to be normal in the third embodiment; and
FIG. 25 is a flowchart showing an operation in the third embodiment.

### DETAILED DESCRIPTION OF THE PREFERRED EMBODIMENTS

In addition to the above problem, according to the technology of Japanese Patent No. 4820313, in case of abnormality, only a message is displayed, but the user cannot obtain information. In a case of maintenance of the air conditioning apparatus, it is useful if pieces of information on the installed devices can be integrally browsed and confirmed.

In this case, if all the pieces of information are transmitted, required pieces of information should be selected, which complicates acquisition of information.

According to the technology of Japanese Patent No. 4820313, when the maintenance operator installs the air conditioning apparatus and performs its test run, it is not determined whether the result of the test run is normal or not. In recent years, the maintenance operator has provided services using a mobile terminal in many cases. Accordingly, it is more useful to allow the result of the test run described above to also be transmitted from the remote control to the terminal apparatus and to be displayed on the terminal apparatus.

Therefore, in addition to the above object, another object is to provide a device information management system that transmits only required information to the terminal apparatus to negate the need of an information selecting operation and achieves favorable usability.

Still another object is to provide a device information management system that can allow the terminal apparatus to easily display the result of a test run.

A first aspect according to the invention includes: a device including a device controller that outputs a run control signal for an air conditioning apparatus and obtains device information on devices constituting the air conditioning apparatus, and a device communicator; and a terminal apparatus including a terminal controller, a terminal communicator that communicates with the device, and a terminal display, wherein the terminal apparatus obtains the device information transmitted from the device controller.

Accordingly, the terminal apparatus can obtain the device information from the device, and register the information. Consequently, the device information on the devices constituting the air conditioning apparatus can be collectively managed.

According to a second aspect forming part of the invention, the device communicator is a light emitter, and the terminal communicator is a light receiver that performs visible light communication with the light emitter of the device, and the terminal apparatus, by the device controller performing light emission control for the light emitter, allows the light receiver to receive the device information transmitted from the light emitter through the visible light communication, and allows the device information to be obtained.

Accordingly, the visible light communication is used for the communication between the device and the terminal apparatus. Consequently, the device information can be easily obtained, a separate communication device is not required to be installed, and the production cost is not increased.

According to a third aspect, the device is a remote control of the air conditioning apparatus.

Accordingly, the device information can be transmitted from the remote control of the air conditioning apparatus to the terminal apparatus.

According to a fourth aspect forming part of the invention, the device controller is a remote control controller provided for the remote control of the air conditioning apparatus, and the device communicator is a remote control display provided for the remote control.

Accordingly, the device information can be transmitted to the terminal apparatus through visible light communication by blinking the remote control display.

According to a fifth aspect forming part of the invention, a cloud server communicable with the terminal apparatus is provided, the terminal controller obtaining the device information transmitted from the device controller transmits the obtained device information to the cloud server, and the cloud server stores therein the device information.

Accordingly, the terminal apparatus can obtain the device information from the device, and register the device information. Storing the device information in the cloud server enables the device information on the devices constituting the air conditioning apparatus to be collectively managed, which allows the device information to be shared among users connectable to the cloud server.

According to a sixth aspect, the terminal apparatus can receive property information on a property where the air conditioning apparatus is installed, the terminal apparatus transmits the property information to the cloud server, and the cloud server stores therein the property information in association with the device information.

Accordingly, the property information and the device information can be managed in association with each other. Consequently, the air conditioning apparatus installed in the single property can be collectively managed.

According to a seventh aspect, the terminal apparatus can receive an inspection result of the air conditioning apparatus, the terminal apparatus transmits the inspection result to the cloud server, and the cloud server stores therein the inspection result in association with the device information.

Accordingly, the inspection result associated with the device information can be easily browsed.

According to an eighth aspect, if an account request issued by a user of the terminal apparatus is authenticated, the cloud server sets an account, and allows the user to whom the account is set to browse information stored in the cloud server, and if the account request is not authenticated, the cloud server sets a temporary account, and limits a part of browsing of the information stored in the cloud server for the user with the set temporary account.

Accordingly, the limitation is imposed on the operation of the temporary account in comparison with the actual account. Consequently, the usability of the user who only wishes simple browsing can be improved.

According to a ninth aspect, the device stores therein a specific ID among pieces of the device information on the air conditioning apparatus, and performs management based on the stored specific ID.

Accordingly, the specific ID information on the device is stored in a remote control memory, thereby allowing management based on the original specific ID information even if a control board is replaced.

A tenth aspect includes: a device including a device controller that outputs a run control signal for an air conditioning apparatus and obtains device information on devices constituting the air conditioning apparatus, a device communicator, and a device display; and a terminal apparatus including a terminal controller, a terminal communicator that communicates with the device, and a terminal display, wherein the terminal controller transmits to the terminal apparatus information corresponding to information displayed on the device display.

Accordingly, the information corresponding to the information displayed on the device display is transmitted from the device to the terminal apparatus. Consequently, unnecessary information is not transmitted. The operation of selecting the information is not complicated. The usability can be improved.

According to an eleventh aspect, the device communicator is a light emitter, and the terminal communicator is a light receiver that performs visible light communication with the light emitter of the device, and the terminal apparatus, by the device controller performing light emission control for the light emitter, allows the light receiver to receive the information transmitted from the light emitter through the visible light communication, and allows the information to be obtained.

Accordingly, the visible light communication is used for the communication between the device and the terminal apparatus. Consequently, the information can be easily obtained, a separate communication device is not required to be installed, and the production cost is not increased.

According to a twelfth aspect, the device is a remote control of the air conditioning apparatus.

Accordingly, the information can be transmitted from the remote control of the air conditioning apparatus to the terminal apparatus.

According to a thirteenth aspect, the device controller is a remote control controller provided for the remote control of the air conditioning apparatus, and the light emitter is a remote control display provided for the remote control.

Accordingly, the information can be transmitted to the terminal apparatus through visible light communication by blinking the remote control display.

According to a fourteenth aspect, the device includes a proximity sensor, and when the proximity sensor detects that the terminal apparatus comes into proximity, the device controller transmits the information from the device to the terminal apparatus.

Accordingly, when the proximity sensor detects the terminal apparatus, the information is transmitted. Consequently, the information can be obtained by the terminal apparatus by only making the terminal apparatus into proximity to the remote control.

According to a fifteenth aspect, the device including the device controller and the device communicator, and the terminal apparatus including the terminal controller, the terminal communicator communicating with the device and the terminal display are provided. The terminal apparatus causes the device communicator to receive test run information transmitted from the device controller to the device communicator, and obtains the test run information, and the terminal controller determines whether a test run result is normal or not based on the test run information, and causes the terminal display to display a determination result of the test run result.

Accordingly, the terminal display of the terminal apparatus can display the result of the test run of the air conditioning apparatus. Consequently, the maintenance operator can easily recognize the result of the test run.

According to a sixteenth aspect, the device communicator is a light emitter, and the terminal communicator is a light receiver that performs visible light communication with the light emitter of the device, and the terminal apparatus, by the device controller performing light emission control for the light emitter, allows the light receiver to receive the test run information transmitted from the light emitter through the visible light communication, and allows the test run information to be obtained.

Accordingly, the terminal display of the terminal apparatus can display the result of the test run of the air conditioning apparatus. Consequently, the maintenance operator can easily recognize the result of the test run. Furthermore, visible light communication is used for the communication between the remote control and the terminal apparatus. Consequently, a separate communication device is not required to be installed, and the production cost is not increased.

According to a seventeenth aspect, the device is a remote control of the air conditioning apparatus.

Accordingly, the test run information can be transmitted from the remote control of the air conditioning apparatus to the terminal apparatus.

According to an eighteenth aspect, the device controller is a remote control controller provided for the remote control of the air conditioning apparatus, and the light emitter is a remote control display provided for the remote control.

Accordingly, the test run information can be transmitted to the terminal apparatus through visible light communication by blinking the remote control display.

According to a nineteenth aspect, the terminal apparatus includes a table that defines a threshold for determining whether the test run result is normal or not, and the terminal controller determines whether the test run result is normal or not based on the test run information, based on the threshold of the table.

Accordingly, the test run result can be easily determined to be normal or abnormal on the basis of the table.

According to a twentieth aspect, if the terminal controller determines that the test run information is not within the threshold and the test run result is abnormal, the terminal controller causes the terminal display to display a factor of an abnormality of the test run result.

Accordingly, the factor of the abnormality of the test run result can be displayed. Consequently, the maintenance operator can grasp the factor of the abnormality of the test run result, and a site of the abnormality is maintained in a concentrated manner. As a result, irrespective of the experience of the maintenance operator, an appropriate operation can be performed. The maintenance operation can be further efficiently performed.

According to a twenty-first aspect, a cloud server communicable with the terminal apparatus is provided, wherein the terminal apparatus transmits the test run result to the cloud server, and the cloud server stores therein the test run result.

Accordingly, the test run result can be accumulated in the cloud server.

According to a twenty-second aspect, wherein the terminal apparatus is a smartphone or a tablet terminal, and the terminal communicator is a camera mounted on the smartphone or the tablet terminal.

Accordingly, the camera of the terminal apparatus can be used as the terminal communicator. Consequently, the terminal communicator is not required to be separately installed in the terminal apparatus, and reduction in equipment cost can be facilitated.

Embodiments of a device information management system according to the present invention are hereinafter described with reference to the drawings.

### (First Embodiment)

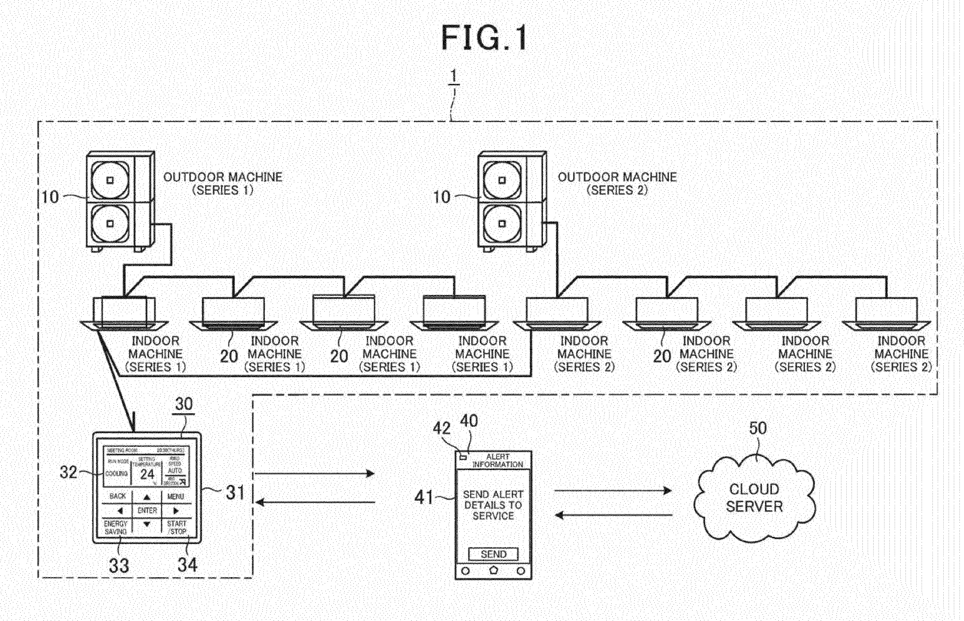

FIG. 1 is a configuration diagram showing a first embodiment of an air conditioning apparatus to which a device information management system according to the present invention is applied.

This air conditioning apparatus 1 shown in FIG. 1 includes an outdoor machine 10, multiple indoor machines 20, and a remote control 30 as a device.

As shown in FIG. 1, the device information management system includes the air conditioning apparatus 1, a terminal apparatus 40, and a cloud server 50 as a server.

In this embodiment, one series of the air conditioning apparatus 1 is configured where the multiple (four in this embodiment) indoor machines 20 are connected to the single outdoor machine 10.

This embodiment has the configuration in which two outdoor machines 10 are connected to one remote control 30 and which manages two series of the air conditioning apparatuses 1 for one remote control 30.

The remote control 30 includes a box-shaped main body 31 installed on a wall surface in a room, for example. A remote control display 32 that includes a liquid crystal display panel is, for example, provided on a front surface of the main body 31. Multiple operation buttons 33 for a user's performing a run start operation or run stop operation, a menu operation, a cursor key operation and the like are provided below the remote control display 32.

For example, a display lamp 34 made up of an LED and the like for displaying the run state of the air conditioning apparatus 1 is provided lower right on the front surface of the main body 31.

The terminal apparatus 40 includes, for example, a terminal display 41 that includes a liquid crystal display panel. In this embodiment, for example, a smartphone, a tablet or the like is used as the terminal apparatus 40. The terminal display 41 is made up of a touch panel or the like, and is configured to serve also as an operation unit.

The terminal apparatus 40 includes a camera 42 as a light receiver for receiving light emitted from the remote control display 32.

Next, the control configuration in this embodiment is described.

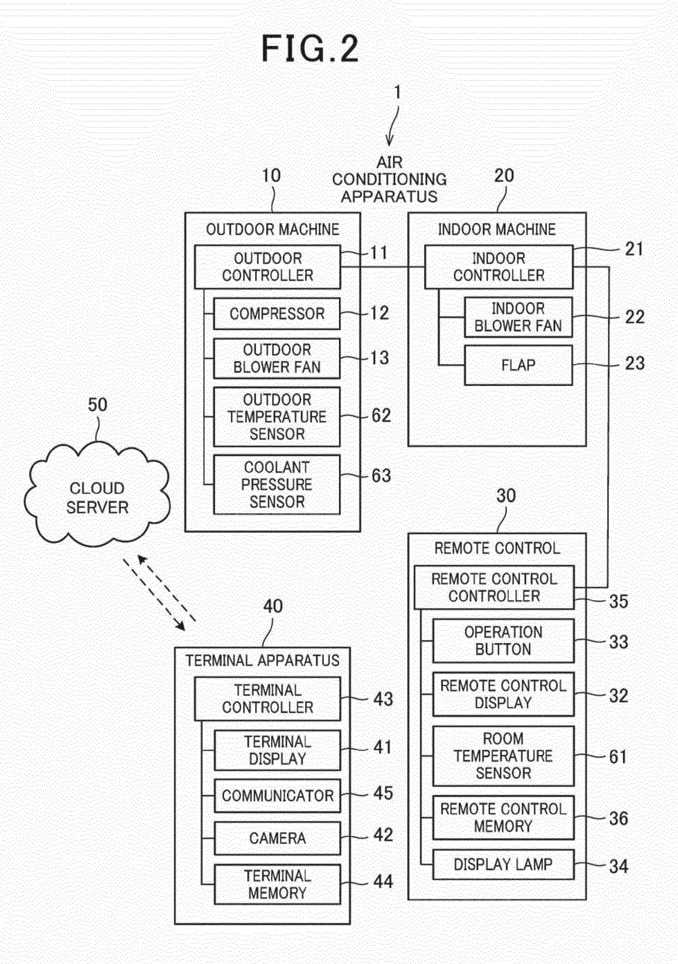

FIG. 2 is a block diagram showing the control configuration of this embodiment.

As shown in FIG. 2, the remote control 30 includes a remote control controller 35 as a device controller. A room temperature sensor 61 for detecting the temperature in a room is provided in the remote control 30. A remote control memory 36 for storing therein predetermined information is provided in the remote control 30.

The remote control controller 35 performs display control for the remote control display 32 and blinking control for the remote control display 32, according to various operation signals, such as of a run start operation, a run mode switch operation of a cooling run, a heating run or the like, and a setting temperature operation, through the operation buttons 33. The remote control controller 35 is configured to output a run control signal to the indoor machines 20 on the basis of a detection value of the room temperature through the room temperature sensor 61.

The indoor machine 20 includes an indoor controller 21. The indoor controller 21 is configured to perform the drive control of an indoor blower fan 22 and the drive control of flaps 23 on the basis of a drive control signal from the remote control controller 35.

The outdoor machine 10 includes an outdoor controller 11. The indoor controller 21 is configured to output a run control signal to the outdoor controller 11. The outdoor controller 11 is configured to perform drive control for the drive frequency of a compressor 12 and an outdoor blower fan 13 on the basis of the run control signal transmitted from the indoor controller 21 and of detection values of an outdoor temperature sensor 62 and a coolant pressure sensor 63.

In this embodiment, the remote control controller 35 is configured to manage integrally the control by the indoor controller 21 and the outdoor controller 11.

The outdoor controller 11 transmits drive frequency information on the compressor 12, outdoor temperature information through the outdoor temperature sensor 62, and coolant pressure information through the coolant pressure sensor 63, to the remote control controller 35. The remote control controller 35 sequentially stores these pieces of information in the remote control memory 36.

The outdoor controller 11 and the indoor controller 21 transmit pieces of ID information specific to the outdoor machine 10 and the indoor machines 20, more specifically, management numbers and model names at the time of production, to the remote control controller 35. The remote control controller 35 sequentially stores these pieces of information in the remote control memory 36. The ID information is managed as device information.

The terminal apparatus 40 includes a terminal controller 43. The terminal apparatus 40 includes a terminal memory 44 for storing therein predetermined information. The terminal apparatus 40 includes a terminal communicator 45, and is configured to be communicable with the cloud server 50 through the terminal communicator 45 via a network.

The terminal apparatus 40 is configured so that an optical signal from the remote control display 32 of the remote control 30 can be received through an image sensor included in the camera 42.

The remote control memory 36 stores therein a program for allowing the remote control display 32 to emit and blink the optical signal. The remote control controller 35 is configured so as to read and execute this program to thereby blink the remote control display 32 and transmit various pieces of information stored in the remote control memory 36.

As for operations in a case of transmission through such light emission, for example, the sequence of pressing operation of the operation buttons 33 for transmission through light emission is preset, and the user performs the pressing operation on the operation buttons 33 in the set order, and allows the remote control controller 35 to control the remote control display 32 to achieve transmission through blinking light emission.

The terminal controller 43 is configured so as to allow the camera 42 to receive the transmission through light emission from the remote control display 32 to thereby obtain various pieces of information transmitted through light emission from the remote control display 32.

The terminal memory 44 stores therein the program for allowing the camera 42 to receive visible light communication through light emission from the remote control display 32. The terminal controller 43 can obtain various pieces of information from the remote control 30 by reading and executing this program. In a case where a smartphone or a tablet terminal is used as the terminal apparatus 40, this program can be obtained by downloading a dedicated application through the network.

For example, a technology called visible light communication is used as means for transmitting information through the remote control display 32 of such a remote control 30.

For example, a technology disclosed in a document "Image Sensor-based Visible Light Communication Technology (Panasonic Technical Journal Vol. 61 No. 2 Nov. 2015)" is used. Such a visible light communication technology is a visible light communication technology that can transmit various types of information at high speed by blinking an LED light source at high speed. More specifically, for example, 128-bit information can be transmitted in 0.3 seconds by blinking the LED light source at high speed.

### (Device information registration process)

Next, a device information registration process performed by the terminal apparatus 40 is described.

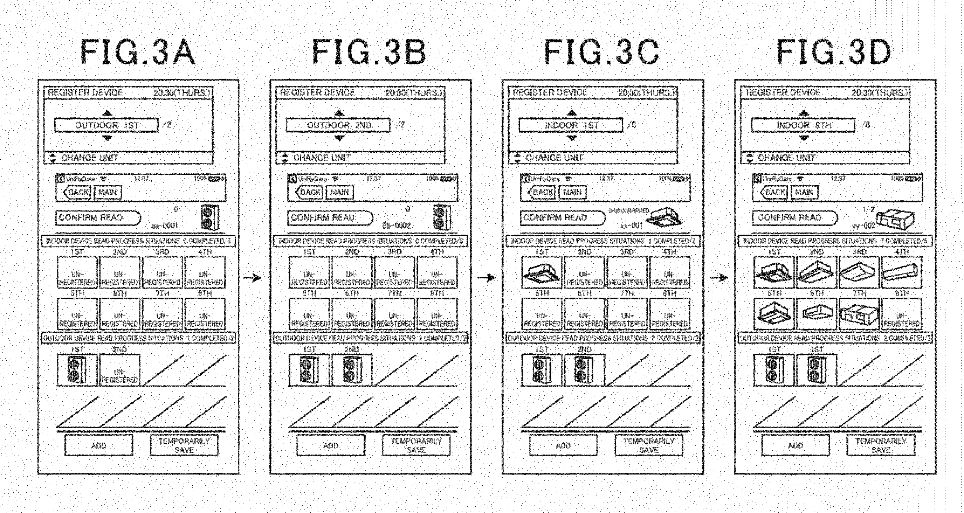

FIGS. 3A to 3D are diagrams showing a display example of the terminal display 41 of the terminal apparatus 40 in a case of device information registration.

The user registers each device of the air conditioning apparatus 1 using the terminal apparatus 40.

As shown in FIG. 3A, the outdoor machine 10 used in the air conditioning apparatus 1 is displayed on the terminal display 41 of the terminal apparatus 40 on the basis of the device information transmitted from the remote control 30.

First, the user designates the outdoor machine 10 concerned, and registers this machine as the outdoor machine 10 of the air conditioning apparatus 1. Subsequently, as shown in FIG. 3B, the user designates the second outdoor machine 10 displayed on the terminal apparatus 40, and registers this machine as the second outdoor machine 10 of the air conditioning apparatus 1.

The indoor machine 20 used in the air conditioning apparatus 1 is displayed on the terminal display 41 of the terminal apparatus 40 in FIG. 3C, on the basis of the device information transmitted from the remote control 30.

The user designates the indoor machine 20 concerned, and registers this machine as the indoor machine 20 of the air conditioning apparatus 1. This operation is performed for each of the indoor machines 20 connected to the outdoor machine 10 having already been registered to register these machines sequentially, thus registering all the indoor machines 20, as shown in FIG. 3D.

The terminal apparatus 40 obtains the pieces of device information on the registered outdoor machine 10 and the indoor machines 20, and transmits these pieces of device information to the cloud server 50. The cloud server 50 stores therein the pieces of device information.

Here, the pieces of device information include, for example, the series numbers, specific IDs, model names, unit numbers, parent machine IDs, remote control IDs of the outdoor machine 10 and the indoor machines 20.

### (Property information registration process)

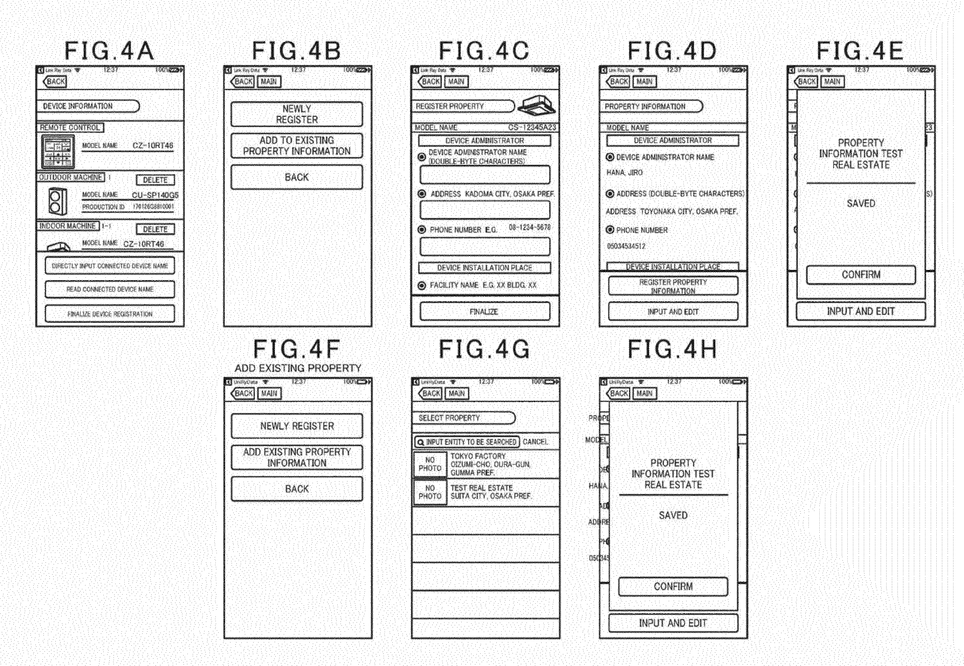

FIG. 4 is diagrams showing a process of registering property information.

As shown in FIG. 4A, after completion of device information registration, information on a property where the air conditioning apparatus 1 is installed is registered. The pieces of property information include, for example, a property name, an address, an administrator name of the air conditioning apparatus 1, and a phone number.

The user operates the terminal display 41 of the terminal apparatus 40 to register the property information. The upper half (FIGS. 4A to 4E) of FIGS. 4A to 4H shows an example in a case of newly registering the property information.

As shown in FIG. 4B, in the case of newly registering the property information, the user selects "Newly register" on the terminal display 41, thereby displaying a property registration screen as shown in FIG. 4C. According to this display, "Administrator name", "Address", "Phone number" and "Facility name" are input.

In this state, the user selects "Finalize". Accordingly, as shown in FIG. 4D, the input property information is displayed. If the registered details of the property information are correct, selection of "Register property information" then registers the property information as shown in 4E. The property information is transmitted to the cloud server 50, and is associated with the device information and is stored by the cloud server 50.

On the other hand, for example, in a case of adding the device information to existing property information, such as a case where a new air conditioning apparatus 1 is installed in the property having already been registered, the user selects "Add existing property" as shown in FIG. 4F.

Accordingly, as shown in FIG. 4G, a list of pieces of property information having already been registered is displayed. The user selects and confirms the property concerned in the list, thereby associating the device information with the existing property information, as shown in FIG. 4H. The property information and the device information are transmitted to the cloud server 50, and are stored by the cloud server 50.

### (Inspection information input process)

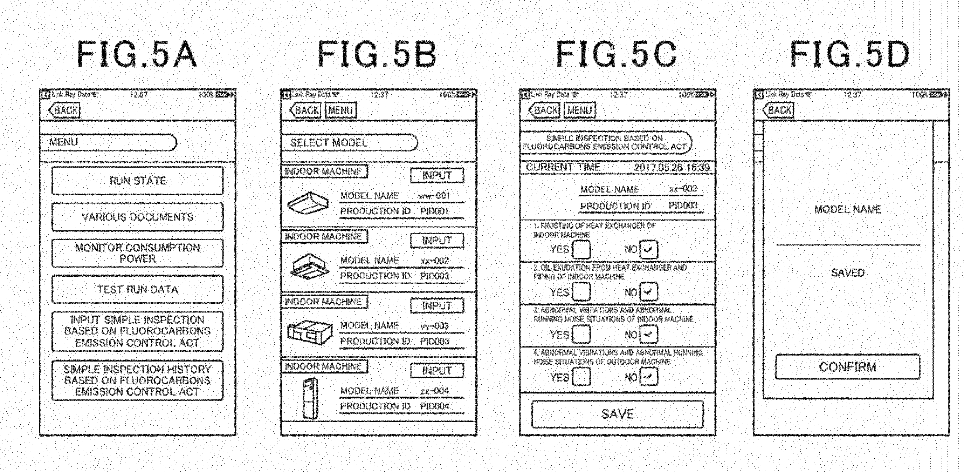

FIGS. 5A to 5D are diagrams showing a process of inputting inspection information on the air conditioning apparatus 1.

As shown in FIG. 5A, in a case of inspection information input, the user selects "input inspection". This embodiment describes an example of a case of performing a simple inspection based on the Fluorocarbons emission control act.

When "input inspection" is selected, the device information having already been registered is displayed on the terminal display 41 as shown in FIG. 5B, and the user selects the device to be subjected to the inspection.

When the device is selected, the list of inspection details is displayed on the terminal display 41 as shown in FIG. 5C, and the user inputs an inspection result. The inspection details include, for example, "Frosting of heat exchanger of indoor machine", "Oil exudation from heat exchanger and piping of indoor machine", "Abnormal vibrations and abnormal running noise situations of indoor machine" and "Abnormal vibrations and abnormal running noise situations of outdoor machine". The inspection details shown in FIGS. 5A to 5D is only one example. Freely selected inspection details can be set if necessary.

When the user inputs the inspection result and selects "Save" and "Confirm", the inspection result is transmitted to the cloud server 50 as shown in FIG. 5D and is saved by the cloud server 50 in association with the device information.

### (Inspection history browsing process)

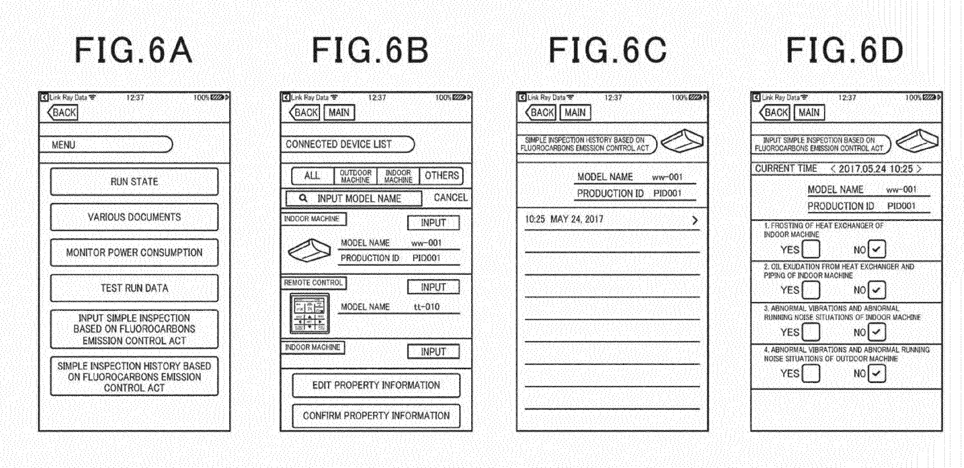

FIGS. 6A to 6D are diagrams showing a process of browsing the inspection information on the air conditioning apparatus 1.

When "inspection history" is selected as shown in FIG. 6A, the device information having already been registered is displayed on the terminal display 41 as shown in FIG. 6B, and the user selects the device that he/she wishes to browse the inspection history.

When the device is selected, a date and time list of the inspection history is displayed on the terminal display 41 as shown in FIG. 6C, and the user inputs a desired date and time.

Accordingly, as shown in FIG. 6D, the inspection result of the selected device and date and time is displayed on the terminal display 41.

### (Account setting process)

To browse the device information, the property information, the inspection history and the like described above, an account for allowing the user to log in is required to be set.

In this embodiment, account settings are managed in individual entities. That is, administrators are set for the respective entities related to the air conditioning apparatuses 1, such as an entity manufacturing the air conditioning apparatus 1, an entity selling the air conditioning apparatus 1, an entity installing the air conditioning apparatus 1, and an entity inspecting and repairing the air conditioning apparatus 1, and each administrator sets accounts for the respective users belonging to the corresponding entity.

This is because through such account setting, each entity recognizes the users, thereby allowing the accounts to be easily authenticated and facilitating management.

In this embodiment, not only an authenticated account (called an actual account in this embodiment) but also a temporary account is set. The temporary account is set until the actual account is set or in a case where only simple browsing is performed.

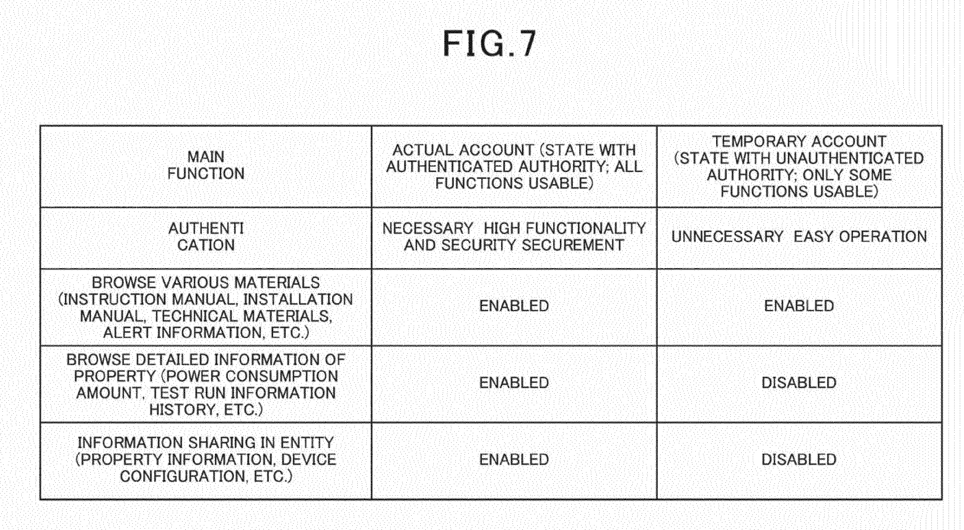

FIG. 7 is a diagram showing an example of operation states of the actual account and the temporary account.

As shown in FIG. 7, the user for whom the actual account is set is allowed to perform operations including all of various document browsing, property information browsing, and information sharing.

On the other hand, the user for whom the temporary account is set is allowed to perform various document browsing, but is not allowed to perform property information browsing and information sharing. These are determined by the cloud server 50. In the case of the temporary account, it is only required not to display a property information browsing operation icon.

The limitation is imposed on the operation of the temporary account in comparison with the actual account as described above. Consequently, the usability of the user who only wishes simple browsing can be improved.

In this embodiment, the remote control memory 36 of the remote control 30 is configured to store therein specific ID information on each device of the air conditioning apparatus 1. That is, the remote control memory 36 stores therein the specific ID among pieces of the device information on the air conditioning apparatus 1, and the remote control 30 manages the specific ID on the basis of the stored production ID.

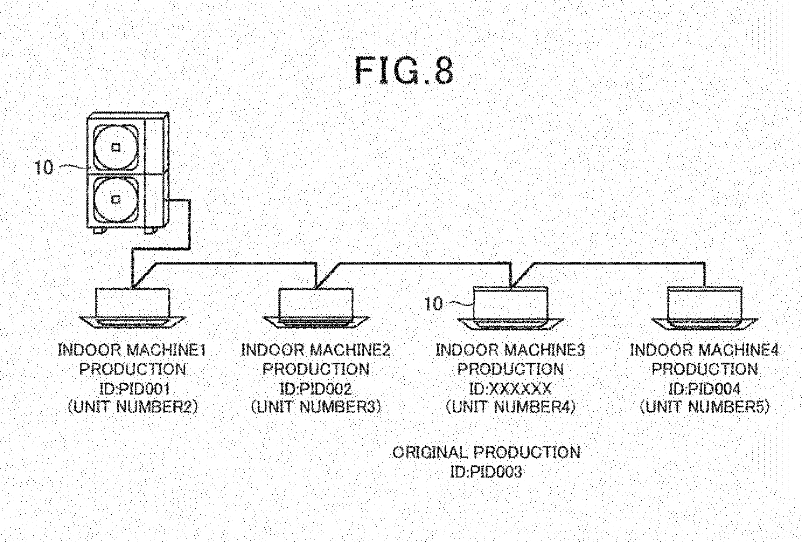

Typically, there is no problem if the specific ID information that the device has is obtained by the remote control 30. For example, if a control board of one indoor machines 20 is replaced for repair as shown in FIG. 8, production ID information is stored in EEPROM of the control board. Accordingly, there is a possibility that the specific ID information is changed from "PID003" to "XXXXXXX".

As with this embodiment, the specific ID information on the device is stored in the remote control memory 36, thereby allowing management based on the original specific ID information even if the control board is replaced.

Next, the operation in this embodiment is described.

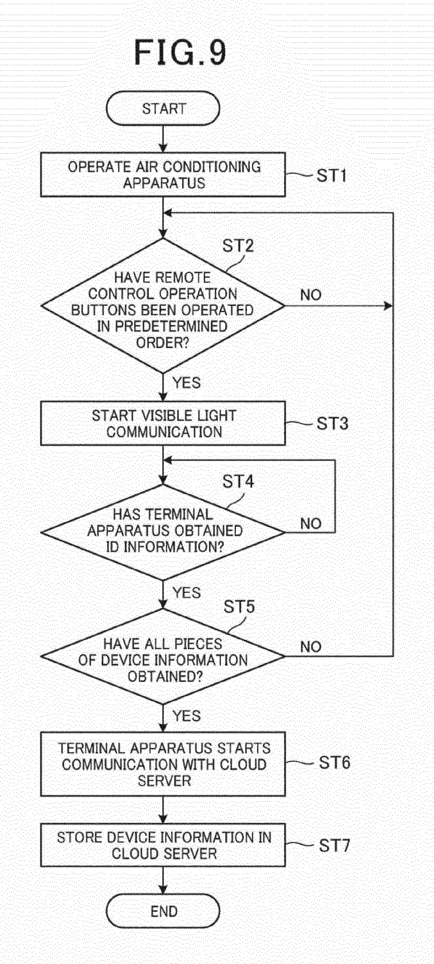

First, a device information registration operation is described. FIG. 9 is a flowchart showing the device information registration operation.

When the running of the air conditioning apparatus 1 is started (ST1), the remote control 30 determines whether the operation buttons 33 have been operated in a predetermined order or not (ST2). If it is determined that the operation buttons 33 have been operated in the predetermined order (ST2: YES), the remote control 30 controls blinking of the remote control display 32, thereby starting visible light communication (ST3).

The terminal apparatus 40 allows the camera 42 to receive the transmission through light emission from the remote control display 32 to thereby obtain various pieces of information transmitted through light emission from the remote control display 32.

The terminal apparatus 40, first, obtains ID information (ST4), and subsequently obtains information on all the devices constituting the air conditioning apparatus 1 (ST5).

When all the pieces of device information have been obtained (ST5: YES), the terminal apparatus 40 causes the terminal display 41 to display the outdoor machine 10 and the indoor machine 20 on the basis of the obtained device information. The user operates the terminal apparatus 40 to register the device information.

When the registration of the device information is completed, the terminal apparatus 40 communicates with the cloud server 50 via the terminal communicator 45 (ST6), and transmits the device information to the cloud server 50.

The cloud server 50 stores the device information transmitted from the terminal apparatus 40, in the cloud server 50 (ST7).

Next, a property information registration operation is described.

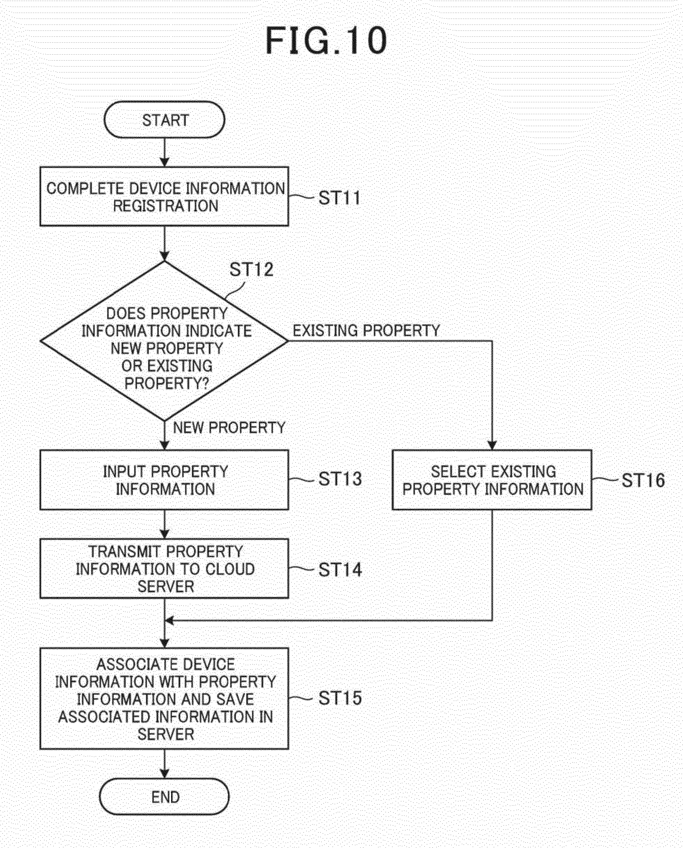

FIG. 10 is a flowchart showing the property information registration operation.

After completion of the device information (ST11), the terminal apparatus 40 causes the terminal display 41 to display a registration screen of the property information.

The user selects whether the property information with which the device information is to be associated is new property information or existing property information, and if the new property information is to be registered (ST12), the user inputs the property information through the terminal apparatus 40 (ST13).

Subsequently, the terminal apparatus 40 transmits the property information through the terminal communicator 45 to the cloud server 50 (ST14). The cloud server 50 associates the property information with the device information and saves these pieces of information (ST15).

On the other hand, in the case of registration with the existing property information, the existing property information displayed on the terminal display 41 of the terminal apparatus 40 is selected (ST16). The selected property information is transmitted via the terminal communicator 45 to the cloud server 50. The cloud server 50 associates the existing property information with the device information and stores therein these pieces of information (ST15).

Next, an account-based operation is described.

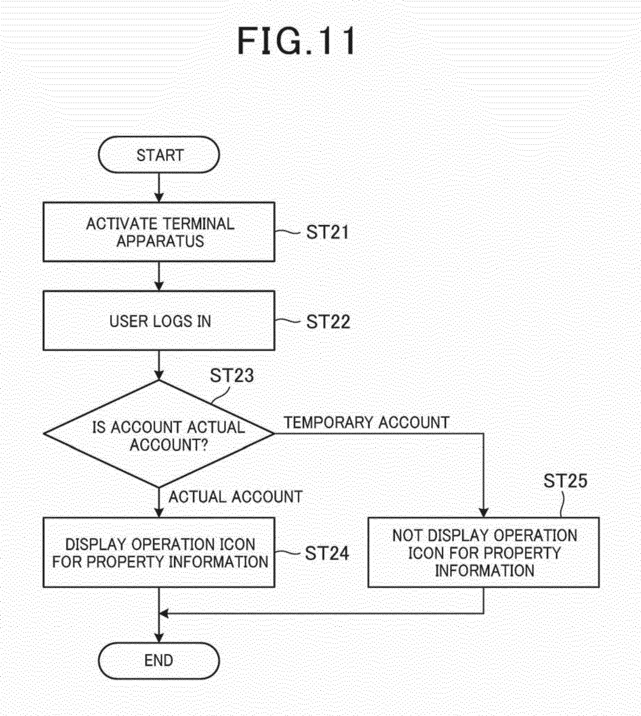

FIG. 11 is a flowchart showing the account-based working operation.

The terminal apparatus 40 is activated (ST21). When the user logs in (ST22), the cloud server 50 determines whether the account is the actual account or not (ST23).

If the account is determined as the actual account (ST23), the terminal apparatus 40 is notified that the account has been authenticated. The terminal apparatus 40 causes the terminal display 41 to display an operation icon for displaying a property information list (ST24).

If the account is determined as the temporary account, the terminal apparatus 40 is notified that the account is the temporary account. The terminal apparatus 40 performs control so as to cause the terminal display 41 not to display the operation icon for displaying the property information list (ST25).

Next, an operation of managing specific ID information on the device by the remote control 30 is described.

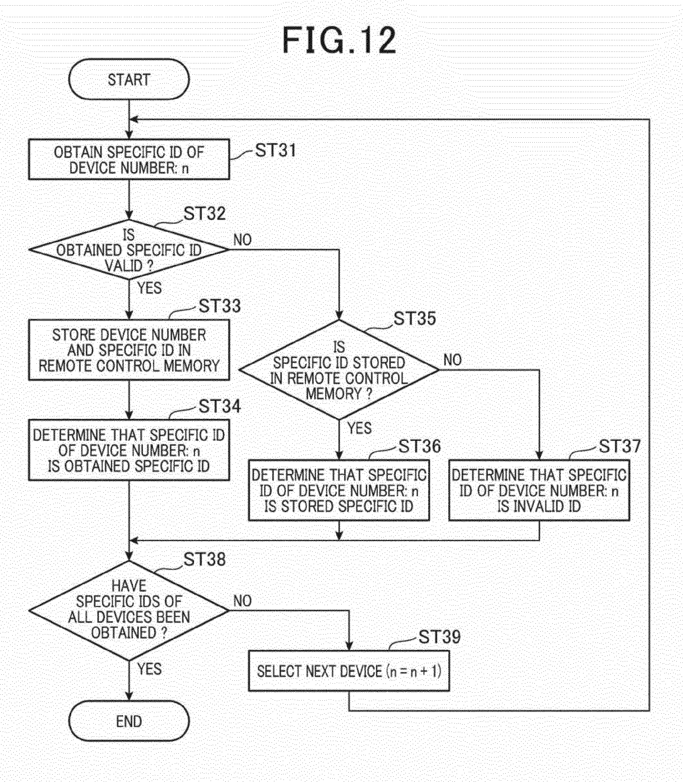

FIG. 12 is a flowchart showing the specific ID information management operation.

The remote control 30 obtains the specific ID of the device number (n) of the outdoor machine 10 or the indoor machine 20 (ST31). The remote control controller 35 determines whether the obtained specific ID is valid or not (ST32).

If the remote control controller 35 determines that the obtained specific ID is valid (ST32: YES), this controller stores the device number and the specific ID in the remote control memory 36 (ST33), and it is determined that the specific ID of the device number (n) is the obtained specific ID (ST34).

If it is determined that the obtained specific ID is valid (ST32: NO), the remote control controller 35 determines whether the specific ID is stored in the remote control memory 36 or not (ST35).

If the specific ID is stored in the remote control memory 36 (ST35: YES), it is determined that the specific ID of the device number (n) is the specific ID stored in the remote control memory 36 (ST36).

On the contrary, if the specific ID is not stored in the remote control memory 36 (ST35: NO), it is determined that the specific ID of the device number (n) is an invalid specific ID (ST37).

If the specific IDs of all the devices have been obtained, the operation is finished. If the specific IDs of all the devices have not been obtained yet (ST38: NO), the next device number (n+1) is selected (ST39), and the operation described above is repeated.

As described above, this embodiment includes: the remote control 30 (device) including the remote control controller 35 (device controller) that outputs a run control signal for the air conditioning apparatus 1 and obtains device information on devices constituting the air conditioning apparatus 1, and the remote control display 32 (device communicator); the terminal apparatus 40 including the terminal controller 43, the terminal communicator 45 that communicates with the remote control 30, and the terminal display 41; and the cloud server 50 that can communicate with the terminal apparatus 40, wherein the terminal apparatus 40 causes the terminal communicator 45 to obtain the device information transmitted from the remote control controller 35 through visible light communication, the terminal controller 43 transmits the obtained device information to the cloud server 50, and the cloud server 50 stores therein the device information.

Accordingly, the terminal apparatus 40 can obtain the device information from the remote control 30, and register the information. Consequently, the device information on the devices constituting the air conditioning apparatus 1 can be collectively managed by storing the device information in the cloud server 50.

In this embodiment, the terminal apparatus 40 allows input of the property information on the property where the air conditioning apparatus 1 is installed. The terminal apparatus 40 transmits the property information to the cloud server 50. The cloud server 50 associates the property information with the device information and stores therein these pieces of information.

Accordingly, the property information and the device information can be managed in association with each other. Consequently, the air conditioning apparatus 1 installed in the single property can be collectively managed.

In this embodiment, the terminal apparatus 40 allows input of the inspection result of the air conditioning apparatus 1. The terminal apparatus 40 transmits the inspection result to the cloud server 50. The cloud server 50 associates the inspection result with the device information and stores therein the associated information.

Accordingly, the inspection result associated with the device information can be easily browsed.

In this embodiment, when the cloud server 50 authenticates an account request issued by the user of the terminal apparatus 40, this server sets the account, thereby allowing the user with the set account to browse the information stored in the cloud server 50. If the account request is not authenticated, the cloud server 50 sets the temporary account, and limits a part of browsing of the information stored in the cloud server 50 for the user with the set temporary account.

Accordingly, the limitation is imposed on the operation of the temporary account in comparison with the actual account as described above. Consequently, the usability of the user who only wishes simple browsing can be improved.

In this embodiment, the remote control 30 stores in the remote control memory 36 the specific ID among pieces of the device information on the air conditioning apparatus 1, and performs management on the basis of the stored specific ID.

Accordingly, the specific ID information on the device is stored in the remote control memory 36, thereby allowing management based on the original specific ID information even if the control board is replaced.

The first embodiment has the configuration that stores the device information transmitted from the terminal apparatus 40 in the cloud server 50, and allows the device information stored in the cloud server 50 to be browsed from the terminal apparatus 40. However, the present invention is not limited thereto. For example, it may be configured such that the cloud server 50 is not used, the device information obtained from the remote control 30 is stored in the terminal apparatus 40, and the pieces of device information are collectively managed by the terminal apparatus 40.

Instead of the cloud server 50, a communicable storage device may be used.

### (Second Embodiment)

Next, a second embodiment of the present invention is described.

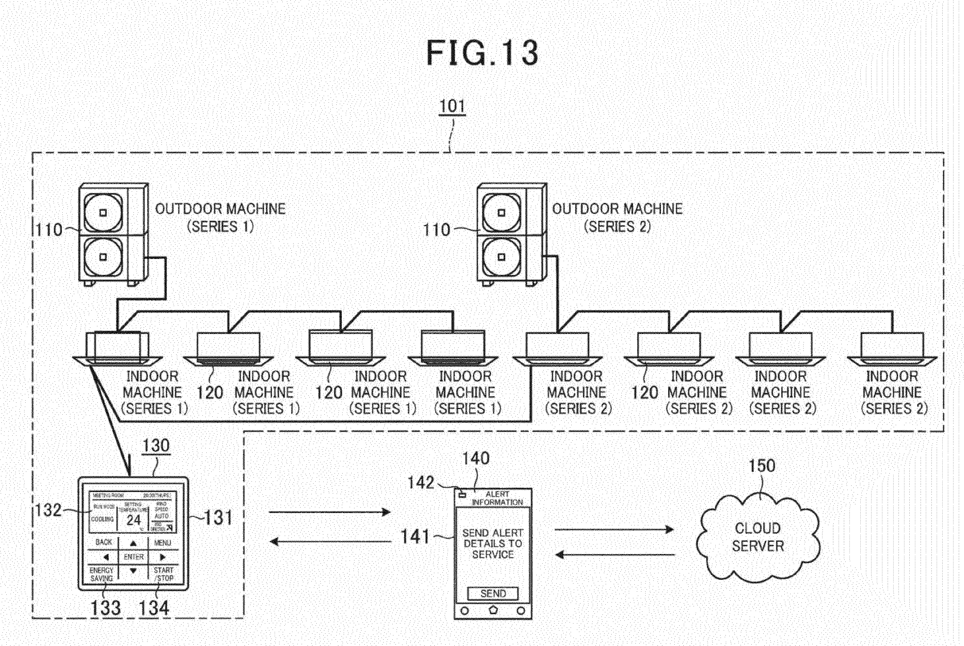

FIG. 13 is a configuration diagram showing a second embodiment of an air conditioning apparatus to which a device information management system according to the present invention is applied.

This air conditioning apparatus 101 shown in FIG. 13 includes an outdoor machine 110, multiple indoor machines 120, and a remote control 130 as a device.

As shown in FIG. 13, the device information management system includes the air conditioning apparatus 101, a terminal apparatus 140, and a cloud server 150 as a server.

In this embodiment, one series of the air conditioning apparatus 101 is configured where the multiple (four in this embodiment) indoor machines 120 are connected to the single outdoor machine 110. This embodiment has the configuration in which two outdoor machines 110 are connected to one remote control 130 and which manages two series of air conditioning apparatuses 101 for one remote control 130.

The remote control 130 includes a box-shaped main body 131 installed on a wall surface in a room, for example. A remote control display 132 that includes a liquid crystal display panel is provided on a front surface of the main body 131. Multiple operation buttons 133 for a user to perform a run start operation or run stop operation, a menu operation, a cursor key operation and the like are provided below the remote control display 132.

For example, a display lamp 134 made up of an LED and the like for displaying the run state of the air conditioning apparatus 101 is provided lower right on the front surface of the main body 131.

The terminal apparatus 140 includes, for example, a terminal display 141 that includes a liquid crystal display panel. In this embodiment, for example, a smartphone, a tablet or the like is used as the terminal apparatus 140. The terminal display 141 is made up of a touch panel or the like, and is configured to serve also as an operation unit.

The terminal apparatus 140 includes a camera 142 as a light receiver for receiving light emitted from the remote control display 132.

Next, the control configuration in this embodiment is described.

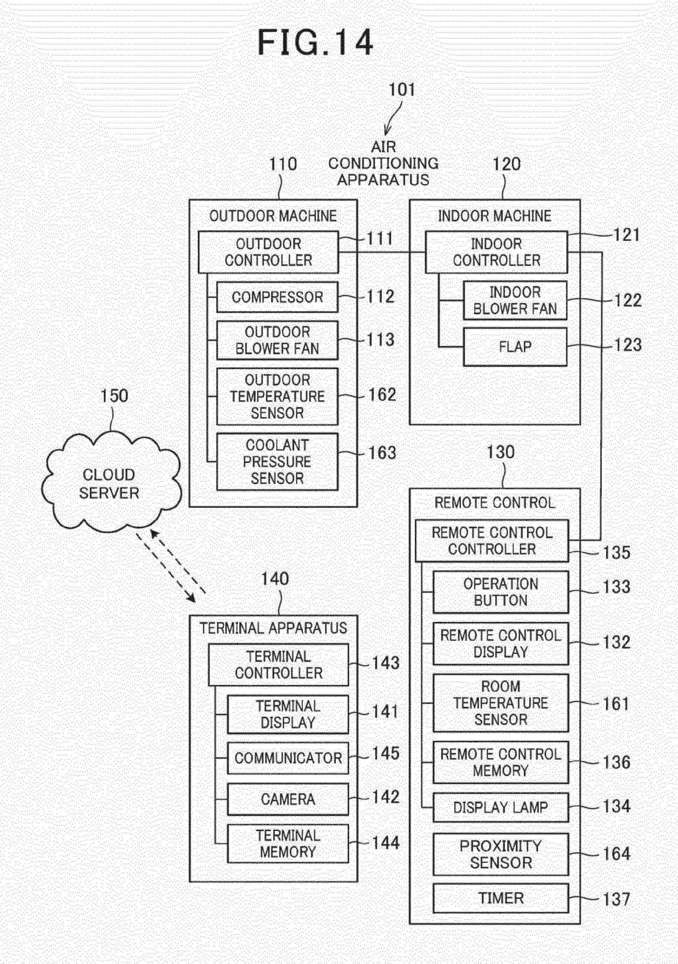

FIG. 14 is a block diagram showing the control configuration of this embodiment.

As shown in FIG. 14, the remote control 130 includes a remote control controller 135 as a device controller. A room temperature sensor 161 for detecting the temperature in the room is provided in the remote control 130. A remote control memory 136 for storing therein predetermined information is provided in the remote control 130.

The remote control controller 135 performs display control for the remote control display 132 and blinking control for the remote control display 132, according to various operation signals, such as of a run start operation, a run mode switch operation of a cooling run, a heating run or the like, and a setting temperature operation, through the operation buttons 133. The remote control controller 135 is configured to output a run control signal to the indoor machines 120 on the basis of a detection value of the room temperature through the room temperature sensor 161.

In this embodiment, the remote control 130 includes a proximity sensor 164. The proximity sensor 164 can detect whether the terminal apparatus 140 comes into proximity to the remote control 130 or not. The remote control 130 further includes a timer 137.

The indoor machine 120 includes an indoor controller 121. The indoor controller 121 is configured to perform the drive control of an indoor blower fan 122 and the drive control of flaps 123 on the basis of a drive control signal from the remote control controller 135.

The outdoor machine 110 includes an outdoor controller 111. The indoor controller 121 is configured to output a run control signal to the outdoor controller 111. The outdoor controller 111 is configured to perform drive control for the drive frequency of a compressor 112 and an outdoor blower fan 113 on the basis of the run control signal transmitted from the indoor controller 121 and of detection values of an outdoor temperature sensor 162 and a coolant pressure sensor 163.

In this embodiment, the remote control controller 135 is configured to manage integrally the control by the indoor controller 121 and the outdoor controller 111.

The outdoor controller 111 transmits drive frequency information on the compressor 112, outdoor temperature information through the outdoor temperature sensor 162, and coolant pressure information through the coolant pressure sensor 163, to the remote control controller 35. The remote control controller 135 sequentially stores these pieces of information in the remote control memory 136.

The remote control memory 136 preliminarily stores therein a preset ID information specific to the air conditioning apparatus 101, more specifically, the production number and the model name. The ID information is managed as device information.

The terminal apparatus 140 includes a terminal controller 143. The terminal apparatus 140 includes a terminal memory 144 for storing therein predetermined information. The terminal apparatus 140 includes a terminal communicator 145, and is configured to be communicable with the cloud server 150 through the terminal communicator 145 via a network.

The terminal apparatus 140 is configured so that an optical signal from the remote control display 132 of the remote control 130 can be received through an image sensor included in the camera 142.

The remote control memory 136 stores therein a program for allowing the remote control display 132 to emit and blink the optical signal. The remote control controller 135 is configured so as to read and execute this program to thereby blink the remote control display 132 and transmit various pieces of information stored in the remote control memory 136.

As for operations in a case of transmission through such light emission, for example, the sequence of pressing operation of the operation buttons 133 for transmission through light emission is preset, and the user performs the pressing operation on the operation buttons 133 in the set order, and allows the remote control controller 135 to control the remote control display 132 to achieve transmission through blinking light emission.

The terminal controller 143 is configured so as to allow the camera 142 to receive the transmission through light emission from the remote control display 132 to thereby obtain various pieces of information transmitted through light emission from the remote control display 132.

The terminal memory 144 stores therein the program for allowing the camera 142 to receive visible light communication through light emission from the remote control display 132. The terminal controller 143 can obtain various pieces of information from the remote control 130 by reading and executing this program. In a case where a smartphone or a tablet terminal is used as the terminal apparatus 140, this program can be obtained by downloading a dedicated application through the network.

This embodiment has the configuration that transmits information according to display on the remote control 130 to the terminal apparatus 140 through visible light communication.

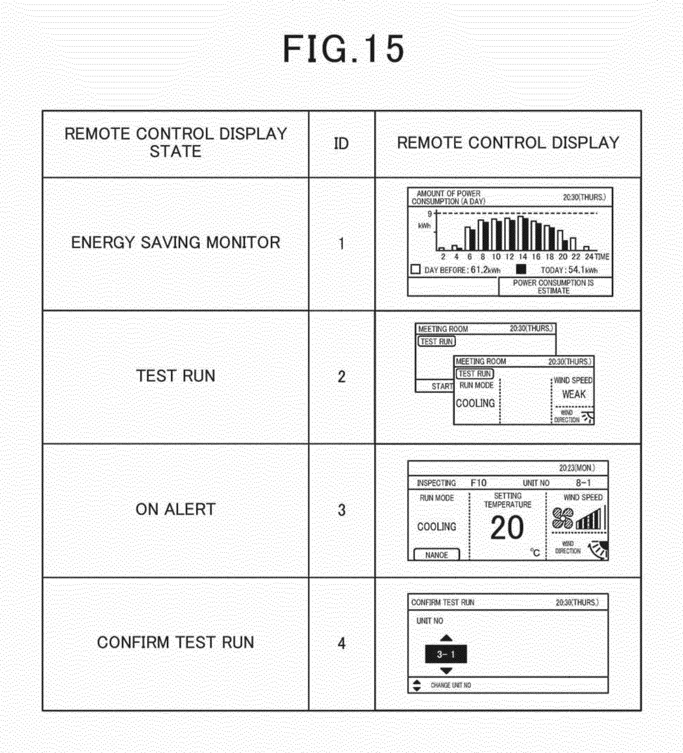

FIG. 15 is a diagram showing a display example of the remote control display 132. The displays are assigned the respective ID numbers.

A case of an ID number "1" is a case where an energy saving monitor screen on a day-to-day basis is displayed on the remote control display 132.

In this case, the remote control controller 135 controls to blink the remote control display 132, thereby transmitting, information including, for example, the indoor machine production ID, the current day, month and year, and the amount of power consumption (a day), to the terminal apparatus 140.

As for the information on the indoor machines 120, the information on the indoor machine 120 among the indoor machines 120 serving as the parent machine is transmitted. As for the current day, month and year, information on the day, month and year obtained from a real-time clock (RTC) of the remote control 130 is transmitted. As for the amount of power consumption, the total value of the entire system is transmitted.

The screen of the energy saving monitor may be displayed on a week-to-week basis, or displayed on a year-to-year basis.

A case of an ID number "2" is a case where a test run screen is displayed on the remote control display 132.

In this case, the remote control controller 135 controls to blink the remote control display 132, thereby transmitting information including, for example, the outdoor machine model name, indoor machine model name, outdoor machine production ID, indoor machine production ID, flow-in temperature, indoor heat exchanger, outdoor heat exchanger, outlet temperature, outdoor temperature, current value, compressor running frequency, and run mode, to the terminal apparatus 140.

As for the information pertaining to the outdoor machine 110, information on the outdoor machine 110 connected to the parent machine among the indoor machines 120 is transmitted. As for the information on the indoor machines 120, the information on the indoor machine 120 among the indoor machines 120 serving as the parent machine is transmitted.

A screen for selecting a unit, such as with the ID number "4", is provided, and the unit is allowed to be selected by the operation buttons 133 of the remote control 130, thereby allowing the information on the indoor machines 120 serving as a child machine.

A case of an ID number "3" is a case where a screen showing an alert is being issued is displayed on the remote control display 132.

In this case, the remote control controller 135 controls to blink the remote control display 132, thereby transmitting, information including, for example, the production ID of the indoor machine 120 on alert, a current alert code, an alert history, and the number of machines on alert, to the terminal apparatus 140.

If multiple indoor machines 120 issue alerts, information on the alert of the representative indoor machine 120 may be always transmitted. Alternatively, the information may be switched to information on another indoor machine 120 on alert in constant time intervals using the timer 137 of the remote control 130. Alternatively, a screen for selecting the indoor machine 120 may be provided to allow the indoor machine 120 to be selected by the operation buttons 133 of the remote control 130, thereby transmitting information on the alert of the selected indoor machine 120.

The display screens on the remote control display 132 and the information corresponding to the display screens shows only an example, and can be freely changed.

As described above, in this embodiment, when the operation buttons 133 of the remote control 130 are operated in the predetermined operation order, the remote control display 132 is controlled by the remote control controller 135 to achieve transmission through blinking light emission.

In this embodiment, when it is detected that the terminal apparatus 140 comes into proximity to the remote control 130 by the proximity sensor 164, the remote control controller 135 performs control to transmit the information.

If the operation buttons 133 are operated in the predetermined order or the terminal apparatus 140 is detected by the proximity sensor 164, the remote control controller 135 sets the transmission time for the information. The transmission time can be freely set, for example, set to about 30 seconds.

The timer 137 measures the transmission time after start of transmission of the information. When the predetermined transmission time elapses, the remote control controller 135 performs control so as to finish the transmission of the information.

To be exact, the proximity sensor 164 cannot determine whether the terminal apparatus 140 comes into proximity or not. However, it can be detected that an object is comes into proximity by the proximity sensor 164. Accordingly, if an object is detected by the proximity sensor 164, the terminal apparatus 140 or the user may recognize that the remote control 130 comes into proximity.

Next, the operation in this embodiment is described.

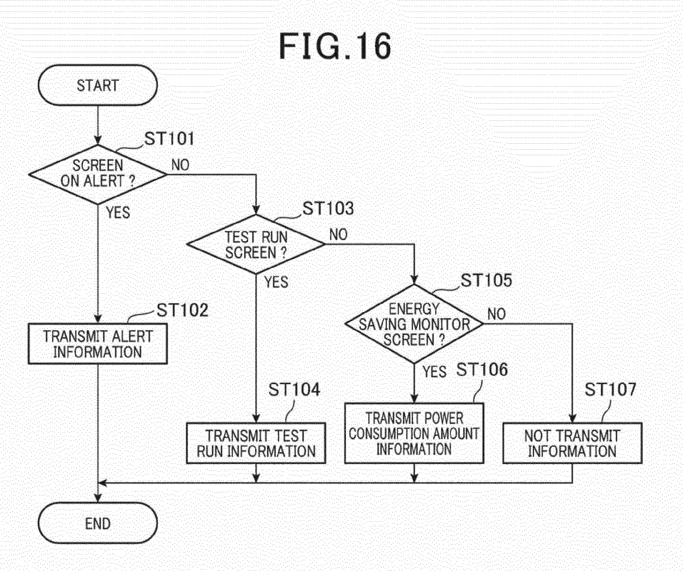

FIG. 16 is a flowchart showing an information transmission operation.

The remote control controller 135 determines whether the states of the remote control 130 is on alert or not (ST101). If this controller determines that the alert occurs (ST101: YES), this controller transmits alert information to the terminal apparatus 140 (ST102).

If the remote control controller 135 determines that the alert does not occur (ST101: NO), this controller determines whether it is in the test run state or not (ST103). If this controller determines that it is in the test run state (ST103: YES), this controller transmits the test run state to the terminal apparatus 140 (ST104).

If the remote control controller 135 determines that it is not in the test run state (ST103: NO), this controller determines whether it is in an energy saving monitor state or not (ST105). If this controller determines that it is in the energy saving monitor state (ST105: YES), this controller transmits energy saving information to the terminal apparatus 140 (ST106).

Furthermore, if the remote control controller 135 determines that it is not in the energy saving monitor state (ST105: NO), this controller does not transmit the information (ST107).

Next, an operation in a case of using the proximity sensor 164 is described.

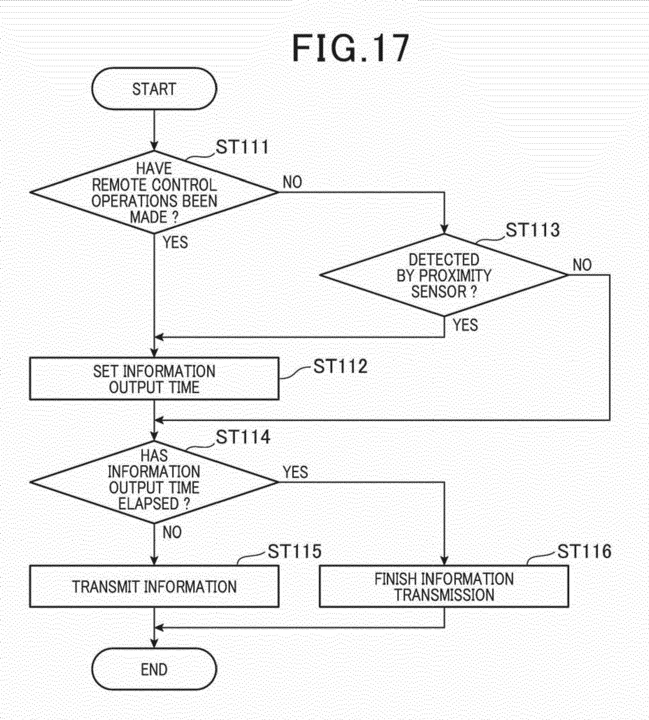

FIG. 17 is a flowchart showing a transmission operation for information using the proximity sensor 164.

The remote control controller 135 determines whether the operation buttons 133 of the remote control 130 have been operated in a predetermined order or not (ST111). If this controller determines that the operation buttons 133 have been operated in the predetermined order (ST111: YES), the remote control controller 135 sets the information transmission time (ST112), and transmits the information through visible light communication.

On the contrary, the remote control controller 135 determines that the operation buttons 133 of the remote control 130 have not been operated (ST111: NO), this controller determines whether the terminal apparatus 140 comes into proximity to the proximity sensor 164 or not (ST113).

If the remote control controller 135 determines that the terminal apparatus 140 comes into proximity to the proximity sensor 164 (ST113: YES), this controller sets the information transmission time (ST112) and transmits the information through visible light communication.

The remote control controller 135 determines whether the information transmission time has elapsed or not (ST114). If this controller determines that the transmission time has not elapsed (ST114: NO), this controller continues transmission of the information to the terminal apparatus 140 (ST115). If this controller determines that the transmission time has elapsed (ST114: YES), this controller finishes the transmission (ST116).

As described above, this embodiment includes: the remote control 130 (device) including the remote control controller 135 (device controller) that outputs a run control signal for the air conditioning apparatus 101 and obtains device information on devices constituting the air conditioning apparatus 101, the remote control display 132 (device communicator) and the remote control display 132 (device display); and the terminal apparatus 140 including the terminal controller 143, the terminal communicator 145 that communicates with the remote control 130, and the terminal display 141, wherein the remote control controller 135 transmits information corresponding to the information displayed on the remote control display 132, to the terminal apparatus 140.

Accordingly, the information corresponding to the information displayed on the remote control display 132 is transmitted from the remote control 130 to the terminal apparatus 140. Consequently, unnecessary information is not transmitted. The operation of selecting the information is not complicated. The usability can be improved.

In this embodiment, the remote control 130 includes the proximity sensor 164. When the remote control controller 135 detects that the terminal apparatus 140 comes into proximity through the proximity sensor 164, this controller transmits the information from the remote control 130 to the terminal apparatus 140.

Accordingly, when the proximity sensor 164 detects the terminal apparatus 140, the information is transmitted. Consequently, the information can be obtained by the terminal apparatus 140 by only making the terminal apparatus 140 into proximity to the remote control 130.

### (Third Embodiment)

Next, a third embodiment of the present invention is described.

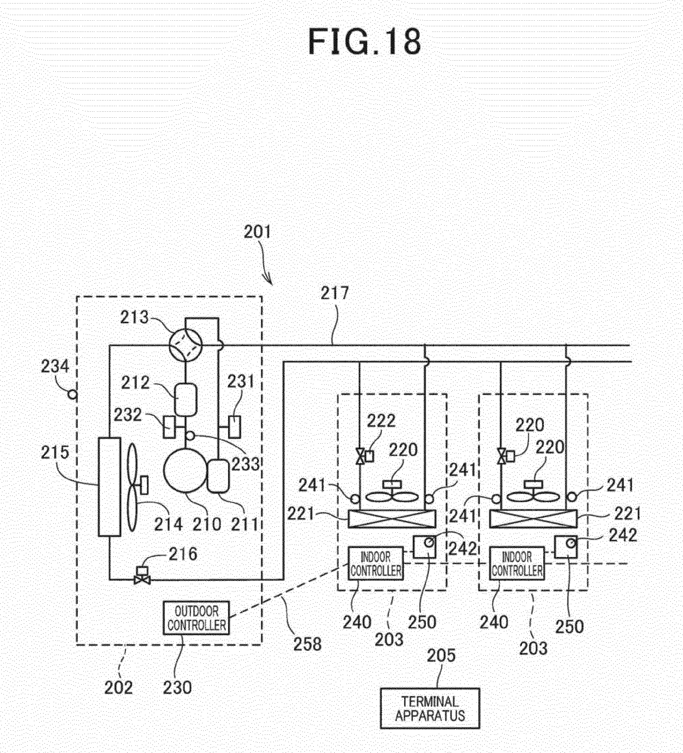

FIG. 18 is a configuration diagram showing the third embodiment of an air conditioning apparatus to which a device information management system according to the present invention is applied.

An air conditioning apparatus 201 shown in FIG. 18 includes an outdoor machine 202, and multiple indoor machines 203.

This embodiment has a configuration where two indoor machines 203 and 203 are connected to one outdoor machine 202.

The outdoor machine 202 includes a compressor 210. A gas-liquid separator 211 that supplies gas coolant to the compressor 210 communicates with an inlet of the compressor 210. A four-way valve 213 communicates through an oil separator 212 with an outlet of the compressor 210. An outdoor heat exchanger 215 that includes an outdoor blower fan 214 communicates with the four-way valve 213. The outdoor heat exchanger 215 is configured to allow heat exchange between air transferred by the outdoor blower fan 214 and the coolant.

An outdoor expansion valve 216 communicates with the outdoor heat exchanger 215.

The multiple indoor machines 203 communicate through coolant piping 217 with the outdoor expansion valve 216 and the four-way valve 213. Each indoor machine 203 includes an indoor heat exchanger 221 that includes an indoor blower fan 220. An indoor expansion valve 222 communicates with one side of the indoor heat exchanger 221.

The outdoor machine 202 includes an outdoor controller 230. A low pressure sensor 231 that detects the pressure of coolant flowing into the compressor 210 is provided at the coolant flow-in side of the compressor 210 of the outdoor machine 202. A high pressure sensor 232 that detects the pressure of coolant being discharged from the compressor 210 is provided at the coolant outlet of the compressor 210. Furthermore, an outdoor coolant temperature sensor 233 that detects the coolant outlet temperature is provided at the coolant outlet of the compressor 210. An outdoor temperature sensor 234 that detects the outdoor temperature is provided at the outdoor machine 202.

The indoor machine 203 includes an indoor controller 240. Indoor coolant temperature sensors 241 that detect the coolant temperature is provided on both sides of the indoor heat exchanger 221 of the indoor machine 203.

A remote control 250 for operating on/off of the run and setting of the temperature in the room is provided in the room of the indoor machines 203. The remote control 250 is provided with a room temperature sensor 242 that detects the temperature in the room.

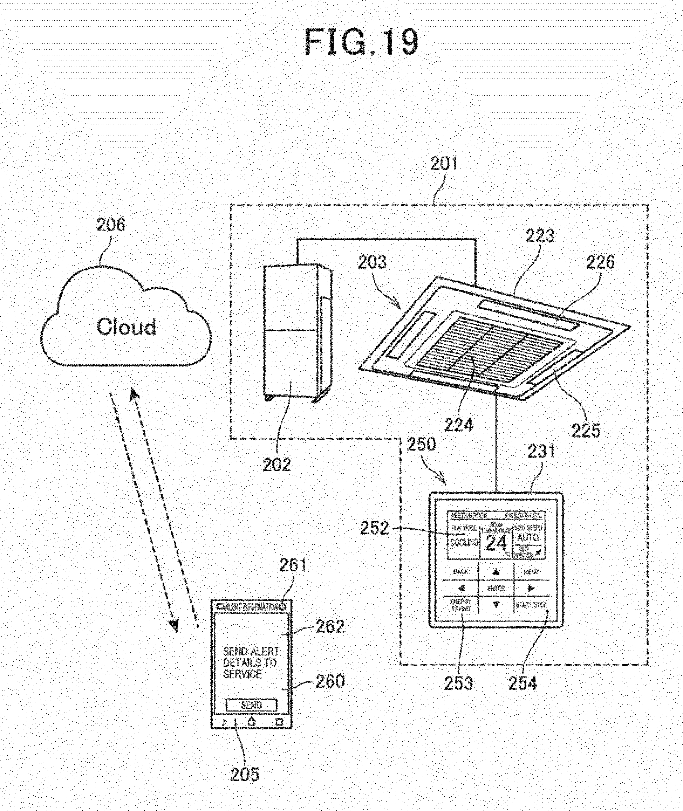

FIG. 19 is a schematic diagram of a device information management system showing the embodiment of the present invention.

As shown in FIG. 19, the device information management system includes the air conditioning apparatus 201, a terminal apparatus 205, and a cloud server 206 as a server.

The air conditioning apparatus 201 includes an outdoor machine 202, multiple indoor machines 203 connected to the outdoor machine 202, and a remote control 250.

The indoor machine 203 includes a decorative panel 223. An air flow-in port 224 is provided at the center of the decorative panel 223. The decorative panel 223 is provided with flow-out ports 225 along the respective sides. Each flow-out port 225 is provided with a flap 226 for adjusting the wind direction of air in a swingable manner. According to the configuration, the indoor blower fan 220 is driven, which takes in the air in the room from the flow-in port 224, and blows the air heat-exchanged by the indoor heat exchanger 221 through the flow-out ports 225 into the room.

The remote control 250 includes a box-shaped main body 251 installed on a wall surface in the room, for example. A remote control display 252 that includes a liquid crystal display panel is provided on a front surface of the main body 251. Multiple operation buttons 253 for a user to perform a run start or run stop operation, a menu operation, a cursor key operation and the like are provided below the remote control display 252.

For example, a display lamp 254 made up of an LED and the like for displaying the run state of the air conditioning apparatus 201 is provided lower right on the front surface of the main body 251.

The terminal apparatus 205 includes, for example, a terminal display 260 that includes a liquid crystal display panel. In this embodiment, for example, a smartphone, a tablet or the like is used as the terminal apparatus 205. The terminal apparatus 205 includes a camera 261 as a light receiver for receiving light emitted from the remote control display 252.

The terminal apparatus 205 includes a terminal operation unit 262. In this embodiment, the terminal display 260 has a touch panel function. The terminal operation unit 262 is configured to allow a predetermined operation to be made through a touch operation onto the terminal display 260.

Next, the control configuration in this embodiment is described.

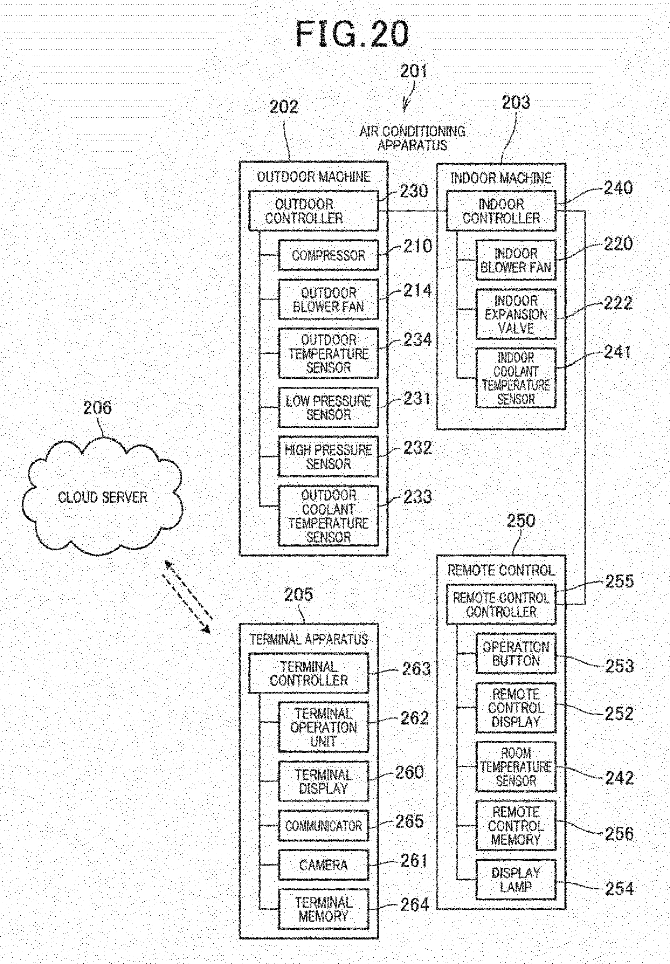

FIG. 20 is a block diagram showing the control configuration of this embodiment.

As shown in FIG. 20, the remote control 250 includes a remote control controller 255 as a device controller. A room temperature sensor 242 for detecting the temperature in the room is provided in the remote control 250. A remote control memory 256 for storing predetermined information is provided in the remote control 250.

The remote control controller 255 performs display control for the remote control display 252 and blinking control for the remote control display 252, according to various operation signals, such as of a run start operation, a run mode switch operation of a cooling run, a heating run or the like, and a setting temperature operation, through the operation buttons 253. The remote control controller 255 is configured to output a run control signal to the indoor controller 240 of the indoor machine 203 on the basis of a detection value of the room temperature through the room temperature sensor 242.

The indoor machine 203 includes the indoor controller 240. The indoor controller 240 is configured to perform the opening degree control of the opening degree of the indoor expansion valve 222, the drive control of the indoor blower fan 220 and the drive control of the flaps 226 on the basis of the drive control signal from the remote control controller 255.

The outdoor machine 202 includes the outdoor controller 230. The indoor controller 240 is configured to output a run control signal to the outdoor controller 230. The outdoor controller 230 is configured to perform drive control for the drive frequency of the compressor 210, the outdoor expansion valve 216, and the outdoor blower fan 214 on the basis of the run control signal transmitted from the indoor controller 240 and of detection values of the outdoor temperature sensor 234, the low pressure sensor 231, the high pressure sensor 232, and the outdoor coolant temperature sensor 233.

In this embodiment, the remote control controller 255 is configured to manage integrally the control by the indoor controller 240 and the outdoor controller 230.

The outdoor controller 230 transmits the drive frequency information on the compressor 210, the outdoor temperature information through the outdoor temperature sensor 234, the coolant pressure information at the flow-in side of the compressor 210 through the low pressure sensor 231, the coolant pressure information at the outlet of the compressor 210 through the high pressure sensor 232, and coolant temperature information at the outlet of the compressor 210 through the outdoor coolant temperature sensor 233, to the remote control controller 255. The remote control controller 255 sequentially stores these pieces of information in the remote control memory 256.

The indoor controller 240 transmits room temperature information through the room temperature sensor 242, and coolant temperature information through the indoor coolant temperature sensor 241, to the remote control controller 255. The remote control controller 255 sequentially stores these pieces of information in the remote control memory 256.

The remote control memory 256 preliminarily stores therein a preset ID information specific to the air conditioning apparatus 201, more specifically, the production number and the model name. The ID information is managed as system information.

The terminal apparatus 205 includes a terminal controller 263. The terminal apparatus 205 includes a terminal memory 264 for storing therein predetermined information. The terminal apparatus 205 includes a communicator 265, and is configured to be communicable with the cloud server 206 through the communicator 265 via a network.

The terminal apparatus 205 is configured so that an optical signal from the remote control display 252 of the remote control 250 can be received through an image sensor included in the camera 261.

The remote control memory 256 stores therein a program for allowing the remote control display 252 to emit and blink the optical signal. The remote control controller 255 is configured so as to read and execute this program to thereby blink the remote control display 252 and transmit various pieces of information stored in the remote control memory 256.

As for operations in a case of transmission through such light emission, for example, the sequence of pressing operation of the operation buttons 253 for transmission through light emission is preset, and the user performs the pressing operation on the operation buttons 253 in the set order, and allows the remote control controller 255 to control the remote control display 252 to achieve transmission through blinking light emission.

The terminal controller 263 is configured so as to allow the camera 261 to receive the transmission through light emission from the remote control display 252 to thereby obtain various pieces of information transmitted through light emission from the remote control display 252.

The terminal memory 264 stores therein the program for allowing the camera 261 to receive visible light communication through light emission from the remote control display 252. The terminal controller 263 can obtain various pieces of information from the remote control 250 by reading and executing this program. In a case where a smartphone or a tablet terminal is used as the terminal apparatus 205, this program can be obtained by downloading a dedicated application through the network.

In this embodiment, the air conditioning apparatus 201 has a test run mode where a test run is performed. The test run mode is for controlling the preset test run, and is performed by a test run switch (not shown) provided for the remote control 250. In this case, if multiple indoor machines 203 reside and the test run switch is operated by the remote control 250 for one indoor machine 203, all the other indoor machines 203 are configured so as to start the run.

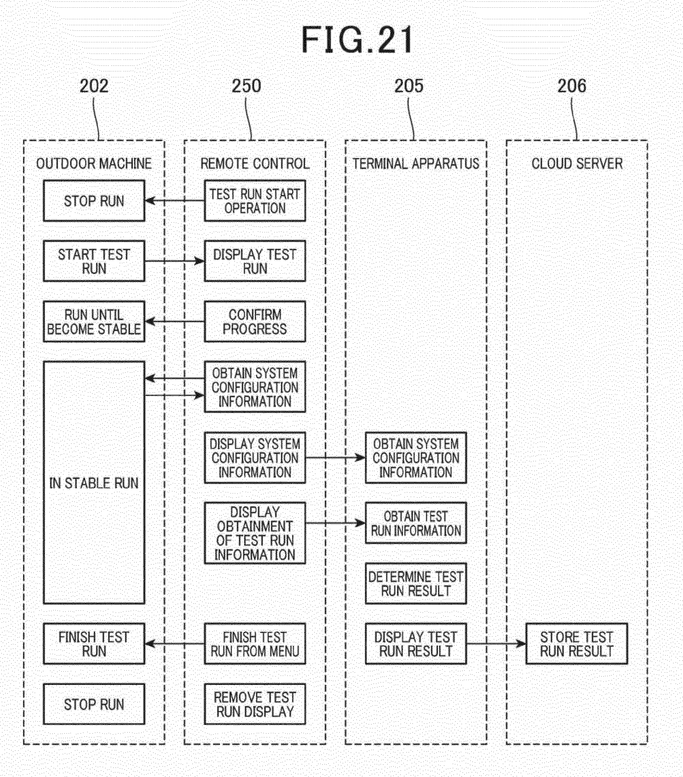

FIG. 21 is a diagram schematically showing transmission and reception of signals or information between the outdoor controller 230 of the outdoor machine 202, the remote control controller 255, the terminal controller 263 and the cloud server 206 in the test run mode.

As shown in FIG. 21, when the user operates the test run button, a test run start signal is transmitted from the remote control controller 255 to the outdoor machine 202, thereby the outdoor machine 202 having been stopped by the control signal from the outdoor controller 230 starts the test run. When the test run is started, the test run start signal is transmitted from the outdoor controller 230 to the remote control, and the remote control display 252 is caused by the remote control controller 255 to display the test run in operation.

The remote control controller 255 confirms the progress state, with the outdoor controller 230, and confirms whether the outdoor machine 202 stably runs or not. The stable run is described later.

If the operation of the outdoor machine 202 is determined to be stable, the remote control controller 255 requests the outdoor controller 230 to issue the information. The outdoor controller 230 transmits the system information, and the test run information that includes the drive frequency of the compressor 210, the low pressure and high pressure of the coolant, and the outlet temperature of the coolant, to the remote control controller 255.

The remote control controller 255 obtains the test run information that includes flow-out temperature information on the indoor machines 203, the coolant temperature information through the indoor coolant temperature sensor 241, and opening degree information on the indoor expansion valve 222, from the indoor machines 203.

The remote control controller 255 transmits the system information and test run information to the terminal apparatus 205. The terminal controller 263 determines whether the result of the test run is normal or abnormal on the basis of the test run information.

The terminal controller 263 causes the terminal display 260 to display the test run result and transmits the test run result to the cloud server 206, and stores the result in the cloud server 206.

Meanwhile, the remote control controller 255 transmits the test run information to the terminal apparatus 205, and subsequently transmits an instruction for finishing the test run to the outdoor machine 202, and removes the display of the test run. Upon receipt of the instruction for finishing the test run, the outdoor controller 230 finishes the test run.

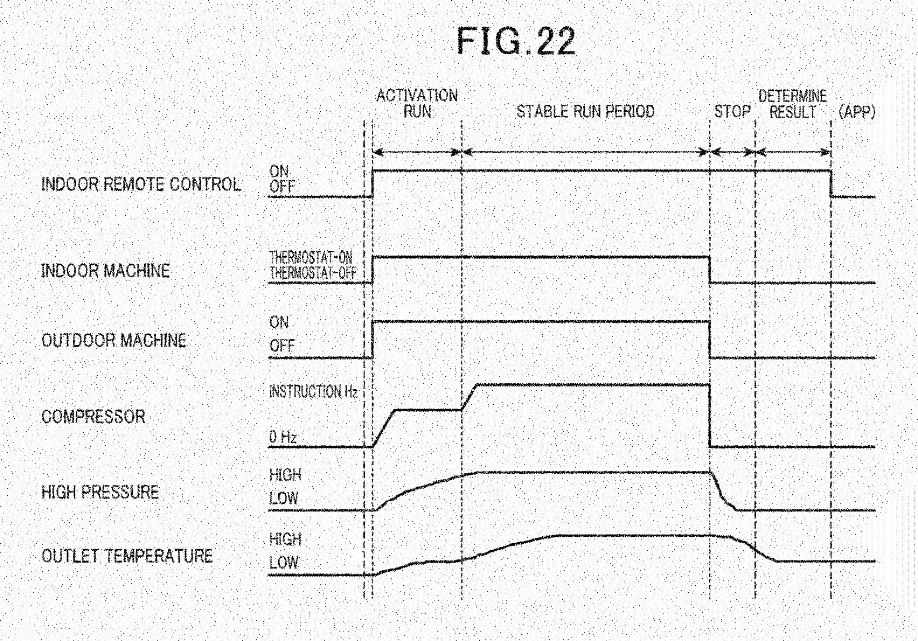

FIG. 22 is a timing chart showing the state of each device in the test run state.

As shown in FIG. 22, when the test run is started, the remote control 250 is turned on, the indoor machine 203 becomes thermostat-on and the outdoor machine 202 is turned on, and the compressor 210 is subjected to drive control at a predetermined drive frequency. At this time, special control, such as defrosting, is not performed. The drive frequency of the compressor 210 is controlled such that the lower limit is limited and is prevented from being the predetermined drive frequency or less.

In this state, the remote control controller 255 monitors the high pressure at the outlet of the compressor 210 and the outlet temperature of the coolant, and determines that the test run becomes stable when the variations in high pressure and outlet temperature become small.

When the run of the compressor 210 is determined to be stable, the remote control controller 255 obtains the drive frequency of the compressor 210, the low pressure and high pressure of the coolant, and the outlet temperature of the coolant, and transmits these items as the test run information to the terminal apparatus 205. The pieces of test run information are transmitted to the terminal apparatus 205 through visible light communication by means of blinking of the remote control display 252 of the remote control 250.

The terminal controller 263 has a function of determining the test run result on the basis of the test run information on the air conditioning apparatus 201 transmitted from the remote control 250.

The terminal apparatus 205 stores the thresholds of the flow-out difference temperature of the indoor machine 203 according to the outdoor temperature, the indoor superheat degree, and the opening degree of the indoor expansion valve 222, in a table, for each indoor machine 203.

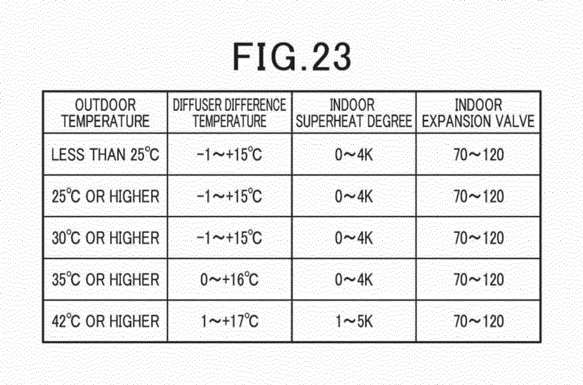

FIG. 23 is a diagram showing an example of a table that defines these thresholds.

As shown in the table of FIG. 23, the thresholds of the flow-out difference temperature of the indoor machine 203 according to the outdoor temperature, the indoor superheat degree, and the opening degree of the indoor expansion valve 222 are predefined.

The terminal controller 263 of the terminal apparatus 205 then obtains the test run information transmitted from the remote control 250, and compares the test run information with the thresholds set in the table, thereby determining whether the flow-out difference temperature, the indoor superheat degree and the opening degree of the indoor expansion valve 222 according to the test run information are within the ranges of the thresholds set in the table or not.

If the terminal controller 263 determines that the test run information is within the ranges of the thresholds, this controller determines that the test run information is normal. If this controller determines that the information is out of the ranges of the thresholds, this controller determines that the test run result is abnormal (insufficient coolant, a failure of the expansion valve, and a mistake in installation).

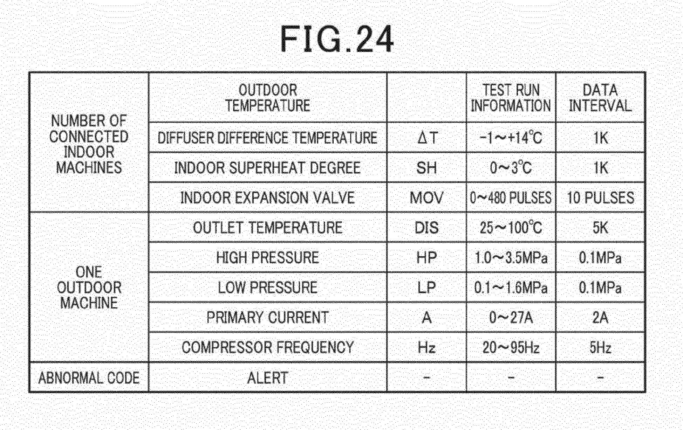

FIG. 24 is a diagram showing an example in a case where the result of the test run is determined to be normal on the basis of the test run information.

As shown in FIG. 24, if the outdoor temperature detected by the outdoor temperature sensor is 30°C or higher, the flow-out difference temperature of the indoor machine is normal in the range from -1 to +14°C, the indoor superheat degree is normal in the range from 0 to 3°C, and the opening degree of the indoor expansion valve is normal in the range from 0 to 480 pulses.

The outlet temperature of the coolant at the outdoor machine is normal in the range from 25 to 100°C. The high pressure is normal in the range from 1.0 to 3.5 MPa. The low pressure is normal in the range from 0.1 to 1.6 MPa. The primary current is normal in the range from 0 to 27 A. The drive frequency of the compressor is normal in the range from 20 to 95 Hz.

In the case of the example in FIG. 24, all the pieces of the obtained test run information are within the respective ranges. Accordingly, the result of the test run is determined to be normal.

If the result of the test run is determined to be abnormal, in this embodiment, if the terminal controller 263 determines that the high pressure at the outlet of the compressor 210 is high, the terminal display 260 displays that the factor is a failure in the outdoor blower fan 214 or air short cycling.

If the low pressure at the flow-in side of the compressor 210 is determined to be low, the terminal display 260 displays that the factor is a failure in the outdoor blower fan 214, air short cycling, a mistake in communication of the coolant piping, or a malfunction in the indoor expansion valve 222.

Furthermore, if the coolant is excessive or deficient, the terminal display 260 displays that the amount of coolant charge is to be confirmed. In case where an alert is issued, the terminal display 260 displays that correcting measures in conformity with the details of the alert are to be taken.

The display details on the terminal display 260 are only one example, and can be variously changed if necessary.

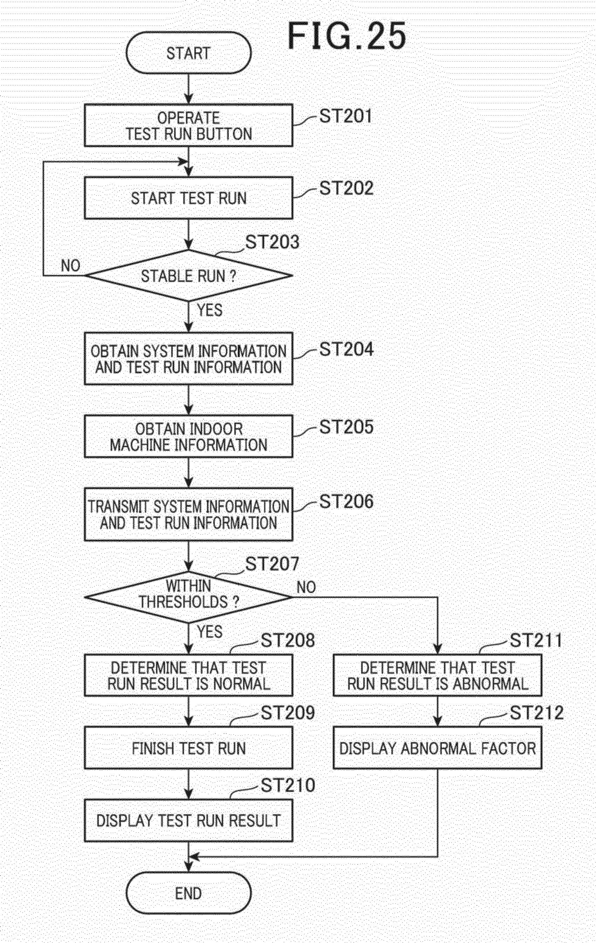

Next, the operation of this embodiment is described with reference to a flowchart shown in FIG. 25.

First, the user operates the test run button (ST201), thereby transmitting the run control signal from the remote control controller 255 to the indoor controller 240 and the outdoor controller 230, and performs drive control for the indoor machines 203 and the outdoor machine 202 to start the test run (ST202).

The remote control controller 255 communicates with the outdoor controller 230 to determine whether the outdoor machine 202 is in the stable run or not (ST203). If the run of the outdoor machine 202 is determined to be stable (ST203: YES), the remote control controller 255 requests the outdoor controller 230 to issue the information, and obtains, from the outdoor controller 230, the system information, and the test run information that includes the drive frequency of the compressor 210, the low pressure and high pressure of the coolant, and the outlet temperature of the coolant (ST204).

Furthermore, the remote control controller 255 obtains the flow-out temperature information on the indoor machines 203, the coolant temperature information through the indoor coolant temperature sensor 241, and the opening degree information on the indoor expansion valve 222, from the indoor machines 203 (ST205).

The remote control controller 255 transmits the system information and the test run information to the terminal apparatus 205 (ST206), and the terminal controller 263 compares the test run information with the thresholds set in the table, and determines whether the flow-out difference temperature, the indoor superheat degree and the opening degree of the indoor expansion valve 222 according to the test run information are within the ranges of the thresholds set in the table or not (ST207).

If the test run information is within the thresholds (ST207: YES), the terminal controller 263 determines that the test run result is normal (ST208), finishes the test run (ST209) and causes the terminal display 260 to display the test run result (ST210).

On the contrary, if the test run result is not in the thresholds (ST207: NO), the terminal controller 263 determines that the test run result is abnormal (ST211), and causes the terminal display 260 to display the factor that makes the test run result abnormal (ST212).

As described above, this embodiment includes: the remote control 250 (device) that includes the remote control controller 255 (device controller), and the remote control display 252 (light emitter); and the terminal apparatus 205 that includes the terminal controller 263, the camera 261 (light receiver) that performs visible light communication with the remote control display 252 of the remote control 250, and the terminal display 260. In the terminal apparatus 205, the remote control controller 255 performs light emission control for the remote control display 252, thereby allowing the camera 261 to receive the test run information transmitted from the remote control display 252 through visible light communication to obtain the test run information, and the terminal controller 263 determines whether the test run result is normal or not on the basis of the test run information, and causes the terminal display 260 to display the determination result of the test run result.

Accordingly, the terminal display 260 of the terminal apparatus 205 can display the result of the test run of the air conditioning apparatus 201. Consequently, the maintenance operator can easily recognize the result of the test run. Furthermore, visible light communication is used for the communication between the remote control 250 and the terminal apparatus 205. Consequently, a separate communication device is not required to be installed, and the production cost is not increased.

In this embodiment, the terminal apparatus 205 includes a table that defines a threshold for determining whether the test run result is normal or not, and the terminal controller 263 determines whether the test run result is normal or not based on the test run information, based on the threshold of the table.

Accordingly, the test run result can be easily determined to be normal or abnormal on the basis of the table.

In this embodiment, if the terminal controller 263 determines that the test run information is not within the threshold and the test run result is abnormal, the terminal controller causes the terminal display 260 to display a factor of an abnormality of the test run result.

Accordingly, the factor of the abnormality of the test run result can be displayed. Consequently, the maintenance operator can grasp the factor of the abnormality of the test run result, and a site of the abnormality is maintained in a concentrated manner. As a result, irrespective of the experience of the maintenance operator, an appropriate operation can be performed. The maintenance operation can be further efficiently performed.

In this embodiment, the cloud server 206 communicable with the terminal apparatus 205 is provided, the terminal apparatus 205 transmits the result of the test run to the cloud server 206, and the cloud server 206 stores therein the result of the test run.

Accordingly, the result of the test run can be accumulated in the cloud server 206.

The embodiments of the present invention have been described with reference to the drawings. However, the present invention is not limited to the embodiments described above, and can be modified in a range without departing from the gist of the invention.

For example, in each of the embodiments, the cases have been described where the remote controls 30, 130 and 250 of the air conditioning apparatuses 1, 101, and 201 are included as the devices. However, the present invention is not limited thereto. For example, the present invention is applicable to any device only if the device includes a display that can emit light.

In the embodiments, the cases have been described where the remote control displays 32, 132 and 252 of the remote controls 30, 130 and 250 are included as the light emitters. However, the present invention is not limited thereto. For example, the display lamps 34, 134 and 254 of the remote controls 30, 130 and 250 may be included as the light emitters. Alternatively, the display lamp that is provided on the decorative panel of each of the indoor machines 20, 120 and 203 and is for displaying the run state of each of the indoor machines 20, 120 and 203, may be used as the light emitter. In this case, the indoor controllers 21, 121 and 240 may be used as the device controllers.

In the embodiments, the description has been made using the examples where the communication between the remote controls 30, 130 and 250 and the respective terminal apparatuses 40, 140 and 205 is performed using visible light communication. However, the present invention is not limited thereto. For example, the communication may be performed using short-range communication, such as NFC (Near Field Communication) or Bluetooth (R).

In the embodiments, the cases have been described where the remote control controllers 35, 135 and 255 are included as the device controllers. However, the present invention is not limited thereto. For example, in a case where an integral controller is provided that integrally manages each of the outdoor controllers 11, 111 and 230, the indoor controllers 21, 121 and 240, and the remote control controllers 35, 135 and 255 of the respective air conditioning apparatuses 1, 101 and 201, this integral controller may be used as the device controller.

In the embodiments, the cases have been described where the smartphone or the tablet terminal is used as each of the terminal apparatuses 40, 140 and 205. However, the present invention is not limited thereto. For example, a dedicated terminal apparatus communicable with each of the cloud servers 50, 150 and 206 may be used. In this case, instead of the camera, a light receiving sensor may be included, as a light receiver.

Furthermore, the server is not necessarily any of the cloud servers 50, 150 and 206. For example, any server, such as a server of a device management company, may be used only if the terminal apparatuses 40, 140, 205 are communicable therewith.

### Reference Signs List

- 1, 101, 201: Air conditioning apparatus
- 10, 110, 202: Outdoor machine
- 11, 111, 230: Outdoor controller
- 12, 112, 210: Compressor
- 13, 113, 214: Outdoor blower fan
- 20, 120, 203: Indoor machine
- 21, 121, 240: Indoor controller
- 22, 122, 220: Indoor blower fan
- 30, 130, 250: Remote control
- 32, 132, 252: Remote control display
- 33, 133, 253: Operation button
- 34, 134, 254: Display lamp
- 35, 135, 255: Remote control controller
- 36, 136, 256: Remote control memory
- 40, 140, 205: Terminal apparatus
- 41,141,260: Terminal display
- 42, 142, 261: Camera
- 43, 143, 263: Terminal controller
- 44, 144, 264: Terminal memory
- 45, 145, 265: Terminal communicator
- 50, 150, 206: Cloud server
- 61, 161, 242: Room temperature sensor
- 62, 162, 234: Outdoor temperature sensor
- 63, 163: Coolant pressure sensor

## Claims

1. A device information management system, **characterized by** comprising:
a device (30, 130, 250) comprising a device controller (35, 135, 255) that outputs a run control signal for an air conditioning apparatus and obtains device information on devices constituting the air conditioning apparatus, and a device communicator (32, 132, 252); and
a terminal apparatus (40, 140, 205) comprising a terminal controller (43, 143, 263), a terminal communicator (45, 145, 265, 42, 142, 261) that communicates with the device, and a terminal display (41, 141, 260),
a cloud server (50, 150, 206) communicable with the terminal apparatus,
wherein the terminal apparatus obtains the device information transmitted from the device controller, the terminal controller transmits the obtained device information to the cloud server, and the cloud server stores therein the device information, **characterized in that**
the device communicator is a light emitter (32, 132, 252),
the terminal communicator is a light receiver (42, 142, 261) that performs visible light communication with the light emitter of the device,
the terminal apparatus, by the device controller performing light emission control for the light emitter, allows the light receiver to receive the device information transmitted from the light emitter through the visible light communication, and allows the device information to be obtained, and
the terminal apparatus can receive property information on a plurality of properties where the air conditioning apparatus is installed, the terminal apparatus transmits the property information to the cloud server, and the cloud server stores therein the property information in association with the device information.

2. The device information management system according to claim 1,
wherein the device is a remote control (30, 130, 250) of the air conditioning apparatus, and
the device controller is a remote control controller (35, 135, 255) provided for the remote control of the air conditioning apparatus, and the device communicator is a remote control display provided for the remote control.

3. The device information management system according to claim 1 or 2, wherein the terminal apparatus can receive an inspection result of the air conditioning apparatus, the terminal apparatus transmits the inspection result to the cloud server, and the cloud server stores therein the inspection result in association with the device information.

4. The device information management system according to any one of claims 1 to 3,
wherein if an account request issued by a user of the terminal apparatus is authenticated, the cloud server sets an account, and allows the user to whom the account is set to browse information stored in the cloud server, and
if the account request is not authenticated, the cloud server sets a temporary account, and limits a part of browsing of the information stored in the cloud server for the user with the set temporary account.

5. The device information management system according to any one of claims 1 to 4, wherein the device stores a specific ID among pieces of the device information on the air conditioning apparatus, and performs management based on the stored specific ID.

6. The device information management system according to claim 1,
wherein the device further comprises a device display (32, 132, 252), and
the device controller transmits information corresponding to information displayed on the device display, to the terminal apparatus.

7. The device information management system according to claim 6,
wherein the device further comprises a proximity sensor, and
when the proximity sensor detects that the terminal apparatus comes into proximity, the device controller transmits the information from the device to the terminal apparatus.

8. The device information management system according to claim 1,
wherein the device further comprises a device display (32, 132, 252),
the terminal apparatus causes the device communicator to receive test run information transmitted from the device controller to the device communicator, and obtains the test run information, and
the terminal controller determines whether a test run result is normal or not based on the test run information, and causes the terminal display to display a determination result of the test run result.

9. The device information management system according to claim 8,
wherein the terminal apparatus comprises a table that defines a threshold for determining whether the test run result is normal or not, and
the terminal controller determines whether the test run result is normal or not based on the test run information, based on the threshold of the table.

10. The device information management system according to claim 9, wherein if the terminal controller determines that the test run information is not within the threshold and the test run result is abnormal, the terminal controller causes the terminal display to display a factor of an abnormality of the test run result.

11. The device information management system according to any one of claims 8 to 10, further comprising a cloud server (50, 150, 206) communicable with the terminal apparatus, wherein the terminal apparatus transmits the test run result to the cloud server, and the cloud server stores therein the test run result.

12. The device information management system according to any one of claims 1 to 11, wherein the terminal apparatus is a smartphone or a tablet terminal, and the terminal communicator is a camera (42, 142, 261) mounted on the smartphone or the tablet terminal.

## Patentansprüche

1. Vorrichtungsinformationenverwaltungssystem, **gekennzeichnet durch** das Umfassen von:
einer Vorrichtung (30, 130, 250), die eine Vorrichtungssteuereinrichtung (35, 135, 255), die ein Betriebssteuersignal für eine Klimaanlage ausgibt und Vorrichtungsinformationen über die Klimaanlage bildende Vorrichtungen erhält, und eine Vorrichtungskommunikationseinrichtung (32, 132, 252) umfasst; und
eines Endgeräts (40, 140, 205), das eine Endgerätsteuereinrichtung (43, 143, 263), eine Endgerätkommunikationseinrichtung (45, 145, 265, 42, 142, 261), die mit der Vorrichtung kommuniziert, und eine Endgerätanzeigeeinrichtung (41, 141, 260) umfasst,
eines Cloud-Servers (50, 150, 206), der mit dem Endgerät kommunizieren kann,
wobei das Endgerät die von der Vorrichtungssteuereinrichtung übertragenen Vorrichtungsinformationen erhält, die Endgerätsteuereinrichtung die erhaltenen Vorrichtungsinformationen an den Cloud-Server überträgt, und der Cloud-Server die Vorrichtungsinformationen speichert,
**dadurch gekennzeichnet, dass**
die Vorrichtungskommunikationseinrichtung ein Lichtemitter (32, 132, 252) ist,
die Endgerätkommunikationseinrichtung ein Lichtempfänger (42, 142, 261) ist, der eine Kommunikation mittels sichtbarem Licht mit dem Lichtemitter der Vorrichtung ausführt,
das Endgerät dem Lichtempfänger mittels der Vorrichtungssteuereinrichtung, die eine Lichtemissionssteuerung für den Lichtemitter durchführt, ermöglicht, die von dem Lichtsender durch die Kommunikation mittels des sichtbaren Lichts übertragenen Vorrichtungsinformationen zu empfangen, und ermöglicht, die Vorrichtungsinformationen zu erhalten, und
das Endgerät Objektinformationen über mehrere Objekte empfangen kann, wo die Klimaanlage installiert ist, wobei das Endgerät die Objektinformationen an den Cloud-Server überträgt und der Cloud-Server die Objektinformationen in Verbindung mit den Vorrichtungsinformationen speichert.

2. Vorrichtungsinformationenverwaltungssystem nach Anspruch 1,
wobei die Vorrichtung eine Fernbedienung (30, 130, 250) der Klimaanlage ist, und
die Vorrichtungssteuereinrichtung eine Fernbedienungssteuereinrichtung (35, 135, 255) ist, die für die Fernbedienung der Klimaanlage vorgesehen ist, und die Vorrichtungskommunikationseinrichtung eine Fernbedienungsanzeigeeinrichtung ist, die für die Fernbedienung vorgesehen ist.

3. Vorrichtungsinformationenverwaltungssystem nach Anspruch 1 oder 2, wobei das Endgerät ein Inspektionsergebnis der Klimaanlage empfangen kann, das Endgerät das Inspektionsergebnis an den Cloud-Server überträgt, und der Cloud-Server das Inspektionsergebnis in Verbindung mit den Vorrichtungsinformationen speichert.

4. Vorrichtungsinformationenverwaltungssystem nach einem der Ansprüche 1 bis 3,
wobei dann, wenn eine von einem Benutzer des Endgeräts ausgegebene Kontoanforderung authentifiziert wird, der Cloud-Server ein Konto einrichtet und dem Benutzer, für den das Konto eingerichtet ist, erlaubt, in dem Cloud-Server gespeicherte Informationen zu durchsuchen, und
dann, wenn die Kontoanforderung nicht authentifiziert wird, der Cloud-Server ein temporäres Konto einrichtet und einen Teil des Durchsuchens der auf dem Cloud-Server gespeicherten Informationen für den Benutzer mit dem eingerichteten temporären Konto einschränkt.

5. Vorrichtungsinformationenverwaltungssystem nach einem der Ansprüche 1 bis 4, wobei die Vorrichtung eine spezifische ID unter den Vorrichtungsinformationen über die Klimaanlage speichert und die Verwaltung auf der Grundlage der gespeicherten spezifischen ID durchführt.

6. Vorrichtungsinformationenverwaltungssystem nach Anspruch 1,
wobei die Vorrichtung ferner eine Vorrichtungsanzeigeeinrichtung (32, 132, 252) umfasst, und
die Vorrichtungssteuereinrichtung Informationen, die den auf der Vorrichtungsanzeigeeinrichtung angezeigten Informationen entsprechen, an das Endgerät überträgt.

7. Vorrichtungsinformationenverwaltungssystem nach Anspruch 6,
wobei die Vorrichtung ferner einen Näherungssensor umfasst, und
wobei dann, wenn der Näherungssensor erfasst, dass das Endgerät in die Nähe kommt, die Vorrichtungssteuereinrichtung die Informationen von der Vorrichtung an das Endgerät überträgt.

8. Vorrichtungsinformationenverwaltungssystem nach Anspruch 1,
wobei die Vorrichtung ferner eine Vorrichtungsanzeigeeinrichtung (32, 132, 252) umfasst,
wobei das Endgerät bewirkt, dass die Vorrichtungskommunikationseinrichtung Testlaufinformationen empfängt, die von der Vorrichtungssteuereinrichtung an die Vorrichtungskommunikationseinrichtung übertragen werden, und die Testlaufinformationen erhält, und
wobei die Endgerätsteuereinrichtung auf der Grundlage der Testlaufinformationen ermittelt, ob ein Testlaufergebnis normal ist oder nicht, und die Endgerätanzeigeeinrichtung veranlasst, ein Ermittlungsergebnis des Testlaufergebnisses anzuzeigen.

9. Vorrichtungsinformationenverwaltungssystem nach Anspruch 8,
wobei das Endgerät eine Tabelle umfasst, die einen Schwellenwert für die Ermittlung, ob das Testlaufergebnis normal ist oder nicht, definiert, und
wobei die Endgerätsteuereinrichtung auf der Grundlage der Testlaufinformationen anhand des Schwellenwerts der Tabelle ermittelt, ob das Testlaufergebnis normal ist oder nicht.

10. Vorrichtungsinformationenverwaltungssystem nach Anspruch 9, wobei dann, wenn die Endgerätsteuereinrichtung ermittelt, dass die Testlaufinformationen nicht innerhalb des Schwellenwertes liegen und das Testlaufergebnis anomal ist, die Endgerätsteuereinrichtung die Endgerätanzeigeeinrichtung veranlasst, einen Faktor einer Anomalität des Testlaufergebnisses anzuzeigen.

11. Vorrichtungsinformationenverwaltungssystem nach einem der Ansprüche 8 bis 10, ferner einen Cloud-Server (50, 150, 206) umfassend, der mit dem Endgerät kommunizieren kann, wobei das Endgerät das Testlaufergebnis an den Cloud-Server überträgt und der Cloud-Server das Testlaufergebnis speichert.

12. Vorrichtungsinformationenverwaltungssystem nach einem der Ansprüche 1 bis 11, wobei das Endgerät ein Smartphone oder ein Tablet-Endgerät ist, und wobei die Endgerätkommunikationseinrichtung eine Kamera (42, 142, 261) ist, die an dem Smartphone oder dem Tablet-Endgerät angebracht ist.

## Revendications

1. Système de gestion d'informations de dispositif, **caractérisé en ce qu'**il comprend :
un dispositif (30, 130, 250) comprenant un contrôleur de dispositif (35, 135, 255) qui délivre en sortie un signal de commande de fonctionnement pour un appareil de climatisation et obtient des informations de dispositif concernant des dispositifs constituant l'appareil de climatisation, et un système de communication de dispositif (32, 132, 252) ; et
un appareil terminal (40, 140, 205) comprenant un contrôleur de terminal (43, 143, 263), un système de communication de terminal (45, 145, 265, 42, 142, 261) qui communique avec le dispositif, et un affichage de terminal (41, 141, 260),
un serveur en nuage (50, 150, 206) pouvant communiquer avec l'appareil terminal,
dans lequel l'appareil terminal obtient les informations de dispositif transmises depuis le contrôleur de dispositif, le contrôleur de terminal transmet les informations de dispositif obtenues au serveur en nuage, et le serveur en nuage stocke en son sein les informations de dispositif,
**caractérisé en ce que**
le système de communication de dispositif est un émetteur de lumière (32, 132, 252),
le système de communication de terminal est un récepteur de lumière (42, 142, 261) qui met en oeuvre une communication en lumière visible avec l'émetteur de lumière du dispositif,
l'appareil terminal, par le contrôleur de dispositif mettant en oeuvre une commande d'émission de lumière pour l'émetteur de lumière, permet au récepteur de lumière de recevoir les informations de dispositif transmises depuis l'émetteur de lumière par l'intermédiaire de la communication en lumière visible, et permet aux informations de dispositif d'être obtenues, et
l'appareil terminal peut recevoir des informations de propriété concernant une pluralité de propriétés où l'appareil de climatisation est installé, l'appareil terminal transmet les informations de propriété au serveur en nuage, et le serveur en nuage stocke en son sein les informations de propriété en association avec les informations de dispositif.

2. Système de gestion d'informations de dispositif selon la revendication 1,
dans lequel le dispositif est une télécommande (30, 130, 250) de l'appareil de climatisation, et
le contrôleur de dispositif est un contrôleur de télécommande (35, 135, 255) fourni pour la télécommande de l'appareil de climatisation, et le système de communication de dispositif est un affichage de télécommande fourni pour la télécommande.

3. Système de gestion d'informations de dispositif selon la revendication 1 ou 2, dans lequel l'appareil terminal peut recevoir un résultat d'inspection de l'appareil de climatisation, l'appareil terminal transmet le résultat d'inspection au serveur en nuage, et le serveur en nuage stocke en son sein le résultat d'inspection en association avec les informations de dispositif.

4. Système de gestion d'informations de dispositif selon l'une quelconque des revendications 1 à 3,
dans lequel si une demande de compte émise par un utilisateur de l'appareil terminal est authentifiée, le serveur en nuage établit un compte, et permet à l'utilisateur auquel le compte est établi de parcourir des informations stockées dans le serveur en nuage, et
si la demande de compte n'est pas authentifiée, le serveur en nuage établit un compte temporaire, et limite une partie de navigation dans les informations stockées dans le serveur en nuage pour l'utilisateur avec le compte temporaire établi.

5. Système de gestion d'informations de dispositif selon l'une quelconque des revendications 1 à 4, dans lequel le dispositif stocke une ID spécifique parmi des éléments des informations de dispositif sur l'appareil de climatisation, et met en oeuvre une gestion sur la base de l'ID spécifique stockée.

6. Système de gestion d'informations de dispositif selon la revendication 1,
dans lequel le dispositif comprend en outre un affichage de dispositif (32, 132, 252), et
le contrôleur de dispositif transmet des informations correspondant aux informations affichées sur l'affichage de dispositif, à l'appareil terminal.

7. Système de gestion d'informations de dispositif selon la revendication 6,
dans lequel le dispositif comprend en outre un capteur de proximité, et
lorsque le capteur de proximité détecte que l'appareil terminal arrive à proximité, le contrôleur de dispositif transmet les informations depuis le dispositif vers l'appareil terminal.

8. Système de gestion d'informations de dispositif selon la revendication 1,
dans lequel le dispositif comprend en outre un affichage de dispositif (32, 132, 252),
l'appareil terminal amène le système de communication de dispositif à recevoir des informations d'essai de fonctionnement transmises depuis le contrôleur de dispositif vers le système de communication de dispositif, et obtient les informations d'essai de fonctionnement, et
le contrôleur de terminal détermine si un résultat d'essai de fonctionnement est normal ou non sur la base des informations d'essai de fonctionnement, et amène l'affichage de terminal à afficher un résultat de détermination du résultat d'essai de fonctionnement.

9. Système de gestion d'informations de dispositif selon la revendication 8,
dans lequel l'appareil terminal comprend une table qui définit un seuil pour déterminer si le résultat d'essai de fonctionnement est normal ou non, et
le contrôleur de terminal détermine si le résultat d'essai de fonctionnement est normal ou non sur la base des informations d'essai de fonctionnement, sur la base du seuil de la table.

10. Système de gestion d'informations de dispositif selon la revendication 9, dans lequel, si le contrôleur de terminal détermine que les informations d'essai de fonctionnement ne sont pas dans les limites du seuil et que le résultat d'essai de fonctionnement est anormal, le contrôleur de terminal amène l'affichage de terminal à afficher un facteur d'une anomalie du résultat d'essai de fonctionnement.

11. Système de gestion d'informations de dispositif selon l'une quelconque des revendications 8 à 10, comprenant en outre un serveur en nuage (50, 150, 206) pouvant communiquer avec l'appareil terminal, dans lequel l'appareil terminal transmet le résultat d'essai de fonctionnement au serveur en nuage, et le serveur en nuage stocke en son sein le résultat d'essai de fonctionnement.

12. Système de gestion d'informations de dispositif selon l'une quelconque des revendications 1 à 11, dans lequel l'appareil terminal est un téléphone intelligent ou un terminal tablette, et le système de communication de terminal est une caméra (42, 142, 261) montée sur le téléphone intelligent ou le terminal tablette.
